# EUROPÄISCHE PATENTSCHRIFT

(11) **EP 3 599 063 B1**
(45) Veröffentlichungstag und Bekanntmachung des Hinweises auf die Patenterteilung: **24.01.2024**
(21) Anmeldenummer: 19186328.1
(22) Anmeldetag: 15.07.2019
(51) Int. Cl.: B25J 9/00

(54) **INDUSTRIEROBOTER MIT PARALLELKINEMATIK SOWIE ROBOTERSTRASSE MIT DERARTIGEN INDUSTRIEROBOTERN**
INDUSTRIAL ROBOT WITH PARALLEL KINEMATICS AND ROBOT ROAD COMPRISING SUCH INDUSTRIAL ROBOTS
ROBOT INDUSTRIEL À CINEMATIQUE PARALLÈLE AINSI QUE CHAÎNE ROBOTIQUE DOTÉE DE TELS ROBOTS INDUSTRIELS

(30) Priorität: 27.07.2018 DE 102018118257
(43) Veröffentlichungstag der Anmeldung: 29.01.2020
(73) Patentinhaber: Gerhard Schubert GmbH, 74564 Crailsheim (DE)
(72) Erfinder: HAAF, Walter, 74564 Crailsheim (DE)
(74) Vertreter: Weickmann & Weickmann PartmbB

(56) Entgegenhaltungen:
- EP-A1- 3 539 726
- EP-A2- 3 000 565
- CN-B- 102 514 003
- DE-A1-102010 014 647
- DE-A1-102014 101 912
- US-A1- 2016 332 295

## Beschreibung

### I. Anwendungsgebiet

Die Erfindung betrifft einen Industrieroboter mit Parallelkinematik in Form eines sogenannten Delta-Roboters, bei dem drei unabhängig voneinander bewegliche Roboterarme jeweils mit ihrem einen Ende schwenkbare um eine Oberarmachse an einer - meist ortsfest montierten - Roboter-Basis befestigt sind und deren drei andere Enden gelenkig an einem Trägerelement angreifen.

Die Roboterarme bestehen dabei jeweils aus dem an der Roboter-Basis gesteuert schwenkbar befestigten Oberarm und einem, je zwei parallel zueinander verlaufende Unterarm-Stangen aufweisenden, Unterarm, wobei die drei Antriebseinheiten für das Verschwenken der Oberarme an der Roboter-Basis befestigt sind. Die drei Paare von Unterarm-Stangen bewirken eine räumliche Parallellogrammführung des Trägerelementes, dessen Trägerelement-Ebene unabhängig von seiner Positionierung im Raum somit immer parallel zur Basis-Ebene liegt.

Insbesondere sind hierfür die Oberarmachsen einachsige Gelenke und die an den Unterarm-Stangen angeordneten Gelenke mehrachsige Gelenke, insbesondere Kugel-Gelenke.

An dem Trägerelement wird der für die jeweilige Arbeitsaufgabe benötigte Endeffektor, meist ein Werkzeug wie etwa ein Greifer, in anderen Fällen auch eine Kamera oder ein Sensor, befestigt, welcher mittels des Roboters gesteuert bewegt und positioniert werden kann.

### II. Technischer Hintergrund

Derartige Delta-Roboter werden vielfach in der Industrie, beispielsweise der Verpackungstechnik, benutzt um mit einem Greifer oder Sauger als Endeffekttor an dem Trägerelement Produkte zu ergreifen und an eine andere Position umzusetzen, beispielsweise in einem Behälter abzulegen.

In der Verpackungstechnik geschieht dies häufig mithilfe so genannter Roboter-Straßen, bei der Produkte, meist ungeordnet, aus einer Produktionsanlage, auf einem sogenannten Produkt-Band heran transportiert werden und in Behälter, die auf einem beispielsweise parallel laufenden Behälter-Band zur Verfügung gestellt werden, umgesetzt werden sollen.

Zu diesem Zweck sind mehrere Roboter, beispielsweise die beschriebenen Roboter mit Parallelkinematik, am häufigsten in der Form als Delta-Roboter, also mit drei Roboterarmen, in Verlaufsrichtung des Produkt-Bandes und/oder Behälter-Bandes hintereinander in einer Roboter-Linie angeordnet, und falls beidseits des Produkt-Bandes jeweils ein Behälter-Band verläuft, auch in zwei bezüglich der Längsmitte des Produktbandes einander gegenüberliegenden parallelen Roboter-Linien.

Die einzelnen Roboter sind oberhalb der Höhe des Produktbandes und/oder Behälterbandes hängend im Gestell der Roboter-Straße befestigt, also mit der Roboter-Basis oben und von dort nach unten ragenden Roboterarmen, sodass das Trägerelement mit dem Werkzeug das untere Ende des hängend montierten Delta-Roboters darstellt.

Jeder Roboter besitzt einerseits einen durch die Dimensionierung seiner Bauteile mechanisch begrenzten, sogenannten mechanischen, Arbeitsbereich, der meist mittels der den Roboter steuernden Software auf einen darin liegenden, kleineren, zulässigen Arbeitsbereich reduziert ist. Dabei interessiert von diesem 3-dimensionalen Arbeitsbereich vor allem der auf der Höhe von Produkt-Band und/oder, meist auf der gleichen Höhe angeordneten, Behälter-Band zur Verfügung stehende, insbesondere zweidimensionale, Arbeitsbereich.

Um eine Roboterstraße mit einer oder zwei Roboterlinien bei einer vorgegebenen Umsetz-Leistung möglichst kurz gestalten zu können, müssen die Roboter zueinander in möglichst geringem Abstand nebeneinander in Durchlaufrichtung der Roboterstraße angeordnet werden, wobei angestrebt wird, dass sich die zulässigen Arbeitsbereiche auf Höhe des Produktbandes möglichst lückenlos aneinander anschließen, gegebenenfalls sogar leicht überlappen, und bei 2 parallelen Roboterlinien dies auch in Querrichtung zur Durchlaufrichtung angestrebt wird.

Dabei besteht das Problem, dass bei einem üblichen Delta-Roboter der, insbesondere zweidimensionale, zulässige Arbeitsbereich auf der Höhe des Produktbandes in der Regel in der Aufsicht betrachtet rund ist und ein innerhalb dieses zulässigen Arbeitsbereichs festgelegter rechteckiger Arbeitsbereich wesentlich kleiner ist als der zulässige Arbeitsbereich.

In der Regel ist jedoch der mechanische Arbeitsbereich in der Aufsicht betrachtet auch der Bereich, der als Bewegungsbereich nicht nur für das Trägerelement und das daran befestigte Werkzeug benötigt wird, sondern auch als Bewegungsbereich für die Ellbögen, also der gelenkigen Verbindung zwischen Oberarm und Unterarm, der Roboterarme.

Reduziert man nun den mechanischen, runden Arbeitsbereich auf einen zulässigen, etwa rechteckigen, Arbeitsbereich, und ordnet die Roboter hintereinander und nebeneinander in ein oder zwei Roboter-Linien so an, dass diese rechteckigen Arbeitsbereiche sich möglichst lückenlos aneinander anschließen, so kann es dabei zu Kollisionen insbesondere unter Beteiligung eines Ellbogens eines Roboterarmes kommen, selbst wenn sich Trägerelement-Zentrum und Werkzeug nur innerhalb des rechteckigen Arbeitsbereiches bewegen, da der Ellbogen über diesen rechteckigen Arbeitsbereich hinaus und damit in den rechteckigen Arbeitsbereich eines benachbarten Roboters hinein vorstehen kann.

In diesem Zusammenhang sind aus der DE 102014101912 A1, der CN 102514003 B sowie der nachveröffentlichten EP 3539726 A1 Delta-Roboter bekannt, bei denen die Schwenkachsen der Oberarme der drei Roboterarme in einer Projektion auf eine X-Y-Ebene ein Dreieck aufspannen und dabei mindestens zwei der Zwischenwinkel des Dreiecks voneinander verschieden sind.

### III. Darstellung der Erfindung

### a) Technische Aufgabe

Es ist daher die Aufgabe gemäß der Erfindung, einen Delta-Roboter zur Verfügung zu stellen, dessen mechanischer Arbeitsbereich nicht rund sondern länglich ausgebildet ist, und die Ellbögen des Delta-Roboters in keiner seiner Funktionsstellungen in der Aufsicht betrachtet seitlich über diesen mechanischen Arbeitsbereich hinaus vorstehen, so dass mithilfe solcher erfindungsgemäßer Delta-Roboter eine kompakte Roboter-Straße mit sehr enger Anordnung der Roboter zueinander aufgebaut werden kann.

### b) Lösung der Aufgabe

Diese Aufgabe wird durch die einen Industrieroboter mit den Merkmalen von Anspruch 1 gelöst. Vorteilhafte Ausführungsformen ergeben sich aus den Unteransprüchen.

Die für die nachfolgenden Erläuterungen notwendigen Definitionen und Beschreibungen von Schwenkachsen, Gelenken und Bauteilen sowie deren Positionierungen sind anhand der Figurenbeschreibung erläutert. Erfindungsgemäß sind die in der Aufsicht betrachteten Zwischenwinkel zwischen den drei Oberarmachsen - von denen mindestens zwei, vorzugsweise alle drei in einer gemeinsamen Ebene, der Basis-Ebene liegen - voneinander verschieden.

Dabei ist einer der beiden Zwischenwinkel kleiner als die - insbesondere gleichgroßen - beiden anderen Zwischenwinkel, und weiter ist dieser kleinste Zwischenwinkel < 25°, besser < 20°, besser < 18°, besser kleiner gleich 16°

Dabei liegen zumindest die beiden Oberarmachsen, die diesen kleinen Zwischenwinkel zueinander bilden, in einer gemeinsamen Basis-Ebene, die gleichzeitig auch die x-y-Ebene des Roboter-Koordinatensystems x-y-z ist, vorzugsweise liegt auch die dritte Oberarmachse in dieser Basis-Ebene. Die Winkelhalbierende dieses kleinsten Zwischenwinkels wird als x-Achse des Roboter-Koordinatensystems festgelegt, die z-Richtung verläuft wie üblich lotrecht zur x-y-Ebene.

Vorzugsweise ist der Roboter in der Aufsicht betrachtet symmetrisch zur x-z-Ebene ausgebildet und die beiden diesbezüglich zueinander symmetrisch angeordneten Roboterarme sind vorzugsweise identisch ausgebildet.

Dadurch wird ein in der Aufsicht unrunder, vorzugsweise rechteckiger, zulässiger Arbeitsbereich des Roboters erzielt, über den die Ellbogen-Gelenke, kurz die Ellbögen, des Roboters dennoch in keiner Funktionsstellung seitlich hinausragen.

Durch den länglichen, umrunden, vorzugsweise rechteckigen Arbeitsbereich wird die eng benachbarte Anordnung mehrerer Roboter erleichtert.

Die Abmessungen und Anordnungen sowie Gelenkverbindungen der Einzelteile des Roboters sind dabei erfindungsgemäß so gewählt, dass der Mittelpunkt der Projektion des Arbeitsbereiches auf die x-y-Ebene, in der Aufsicht, also in z-Richtung, betrachtet, abseits des Kinematischen Zentrums angeordnet ist, insbesondere versetzt in x-Richtung und von den beiden symmetrisch zueinander angeordneten Roboterarmen weg.

Einer der beiden Oberarme, vorzugsweise der primär in Richtung der Winkelhalbierenden verlaufende, Oberarm ist kürzer - im Sinne der in der Figurenbeschreibung enthaltenen Definition der Länge - als die beiden Oberarme der beiden anderen Roboterarme, welche insbesondere gleich lang ausgebildet sind.

Das Massenträgheitsverhältnis zwischen dem Massenträgheitsmoment des Rotationsantriebes um dessen Rotationsachse für einen Oberarm zu dem Massenträgheitsmoment des durch den Rotationsantrieb angetriebenen Roboterarmes um dessen Oberarmachse - wenn bei den drei Roboterarmen die gleiche Stellung zwischen Oberarm und Unterarm vorliegt - ist bei einem ersten der Roboterarme verschieden von dem Massenträgheitsverhältnis des zweiten und dritten Roboterarmes, deren Massenträgheitsverhältnisse insbesondere gleich sind.

Insbesondere ist das Massenträgheitsverhältnis eines ersten Roboterarmes größer als die Massenträgheitsverhältnisse der beiden anderen Roboterarme, wodurch eine hohe Bewegungsgeschwindigkeit des Roboters ermöglicht wird.

Vorzugsweise ist das Massenträgheitsmoment eines Rotationsantriebes, vorzugsweise des Rotationsantriebes des 1. Roboterarmes, größer als das der Rotationsantriebe der beiden anderen Roboterarme, wobei diese beiden anderen Massenträgheitsmomente insbesondere gleich groß sind.

Die beiden parallel zueinander verlaufenden Unterarm-Stangen, die jeder Unterarm umfasst, sind bei einem der Roboterarme - insbesondere dem Roboterarm, dessen primäre Erstreckungsrichtung in der Aufsicht betrachtet etwa entlang der Winkelhalbierenden des kleinsten Zwischenwinkels verläuft und/oder des Roboterarmes, der kürzer ist als die beiden anderen Roboterarme - weiter zueinander beabstandet als bei den beiden anderen Roboterarmen, bei denen dieser Abstand insbesondere gleich ist.

Dies erleichtert eine stabile Führung des Trägerelementes des Roboters.

Einer der Roboterarme - insbesondere der Roboterarm, dessen primäre Erstreckungsrichtung in der Aufsicht betrachtet etwa entlang der Winkelhalbierenden des kleinsten Zwischenwinkels verläuft und/oder des Roboterarmes, der kürzer ist als die beiden anderen Roboterarme - ist mit seiner Oberarmachse deutlich näher am kinematischen Zentrum angeordnet als die Oberarmachsen der beiden anderen Roboterarme.

Bei diesem Roboterarm befinden sich die Oberarmachse einerseits und die Verbindungsstelle zwischen diesem Oberarm und dem daran befestigten Unterarm andererseits auf einander gegenüberliegenden Seiten bezüglich des kinematischen Zentrums oder die Oberarmachse dieses Roboterarmes schneidet das kinematische Zentrum.

Anders ausgedrückt verläuft das als Gerade ausgebildete kinematische Zentrum durch das Basis-Dreieck hindurch oder schneidet eine der Seiten dieses Basis-Dreieckes, welches durch die drei in der Regel in einer Ebene liegenden Oberarmachsen gebildet wird.

Die Roboter-Basis, die meist als Platte ausgebildet ist, besitzt einen zu ihrem Umfang hin offenen Ausschnitt, der wenigstens teilweise oberhalb eines Roboterarmes - insbesondere des Roboterarmes, dessen primäre Erstreckungsrichtung in der Aufsicht betrachtet etwa entlang der Winkelhalbierenden des kleinsten Zwischenwinkels verläuft und/oder des Roboterarmes, der kürzer ist als die beiden anderen Roboterarme - angeordnet ist, so dass dieser bei einem Hochschwenken seines Oberarmes über die zur Basis-Ebene hinaus parallele Lage nicht mit der Roboter-Basis kollidiert, an deren Unterseite vorzugsweise alle drei Roboterarme befestigt sind.

Weiterhin wird Schutz beansprucht für eine mit erfindungsgemäßen Robotern ausgestattete Roboterstraße, wobei, entlang der mindestens einen Roboterlinie, die in der Roboterstraße vorhanden ist, in der Aufsicht betrachtet die erfindungsgemäßen Roboter so angeordnet werden, dass deren unrunder, länglicher - elliptischer oder rechteckiger - Arbeitsbereich - sei es der mechanisch bedingte maximale Arbeitsbereich oder ein demgegenüber, darin liegender, anwendungsbezogener zulässiger Arbeitsbereich - mit seiner größten Erstreckungsrichtung quer, insbesondere lotrecht, zu der Verlaufsrichtung der Roboterlinie, der sogenannten Durchlaufrichtung, liegt.

In dieser Durchlaufrichtung grenzen die Arbeitsbereiche der einzelnen Roboter möglichst eng aneinander an, sodass dazwischen in Durchlaufrichtung keine oder nur möglichst kurze Lücken entstehen. Ein Überlappen in Durchlaufrichtung wird jedoch meist vermieden, da dies in der Steuerung der Roboterstraße einen aufwändigen Kollisionsvermeidungs-Algorithmus erfordert, da dann zwei in Durchlaufrichtung benachbarte Roboter kollidieren könnten.

Denn für die Roboterstraße werden solche Roboter verwendet, deren Arbeitsbereich nicht nur in der Aufsicht betrachtet unrund ist sondern länglich, sondern bei denen der Roboter, insbesondere dessen Ellbögen, auch in keiner Funktionsstellung in der Aufsicht betrachtet über seinen zweidimensionalen Arbeitsbereich hinausragt.

Vorzugsweise sind alle Roboter identisch ausgebildet.

Falls die Roboter in der Aufsicht betrachtet insofern unsymmetrisch ausgebildet sind, als die Oberarme der über eine Parallel-Kinematik verfügenden Roboter im maximal nach oben geschwenkten Zustand vom kinematischen Zentrum des Roboters aus unterschiedlich weit abstreben, werden die Roboter, in der Aufsicht betrachtet, so in der Roboterlinie angeordnet, dass sie entlang der Roboterlinie in jeweils gleicher Orientierung angeordnet sind.

Vorzugsweise weist dabei der am wenigstens weit vom kinematischen Zentrum aus abstrebende Oberarm immer in die gleiche Richtung, vorzugsweise in oder entgegen der Durchlaufrichtung der Roboterstraße.

Häufig verfügt eine solche Roboterstraße über zwei parallel angeordnete Roboterlinien, also Reihen von Robotern, die in Durchlaufrichtung verlaufen und in der Regel jeweils die eine Hälfte eines darunter ebenfalls in Durchlaufrichtung sich erstreckenden Produktbandes mit ihrem Arbeitsbereich abdecken.

In diesem Fall werden die in der Aufsicht unsymmetrischen Roboter, insbesondere Delta-Roboter, so angeordnet, dass sie in einer Roboterlinie in der Aufsicht betrachtet eine um 180° gedrehte Lage gegenüber der Anordnung in der benachbarten, anderen Roboterlinie besitzen.

Dies hat den Vorteil, dass die in der Aufsicht betrachtet vom kinematischen Zentrum weit abragenden Oberarme zweier etwa auf gleicher Position in Durchlaufrichtung befindlicher, benachbarter Roboter auf den beiden Roboterlinien in Durchlaufrichtung zueinander versetzt sind und diese Oberarme daher in Querrichtung sogar überlappen dürfen.

Insbesondere dadurch kann erreicht werden, dass die längliche, insbesondere rechteckige, Projektion der zulässigen Arbeitsbereiche auf die x-y-Ebene der analogen, also auf gleicher Position in Durchlaufrichtung befindlichen, zwei Roboter auf den verschiedenen Roboterlinien in Querrichtung einander berühren oder sogar etwas überlappen, sodass in Querrichtung alle Positionen auf dem Produktband, auch im mittleren Bereich, erreicht werden können und natürlich bis zu den äußeren Rändern des Produktbandes.

Die längliche, insbesondere rechteckige, Projektion der zulässigen Arbeitsbereiche auf die x-y-Ebene der Roboter auf den beiden Roboterlinien erstrecken sich in Querrichtung natürlich bis über den äußeren Rand des Produktbandes hinaus, insbesondere über das daneben laufende Behälterband noch hinweg.

### c) Ausführungsbeispiele

Ausführungsformen gemäß der Erfindung sind im Folgenden beispielhaft näher beschrieben. Es zeigen:
- **Fig. 1a, b:**: perspektivische Darstellungen des erfindungsgemäßen Roboters in einer neutralen Mittellage,
- **Figur 2a:**: eine Aufsicht auf den Roboter von oben in dieser neutralen Mittellage,
- **Figur 2b:**: die Darstellung der Figur 2 war mit hervorgehobenen geometrischen Linien und reduzierter realistischer Darstellung,
- **Figur 3a:**: eine Ansicht des Roboter von unten, als entgegen der Blickrichtung der Figur 2a, in dieser neutralen Mittellage,
- **Figur 3b:**: eine vergrößerte Darstellung des Trägerelementes aus Figur 3a,
- **Figur 4a, b:**: Ansichten des Roboters von der Seite in unterschiedlichen Funktionsstellungen,
- **Figur 5a:**: eine Darstellung einer Roboterstraße in der Aufsicht von oben,

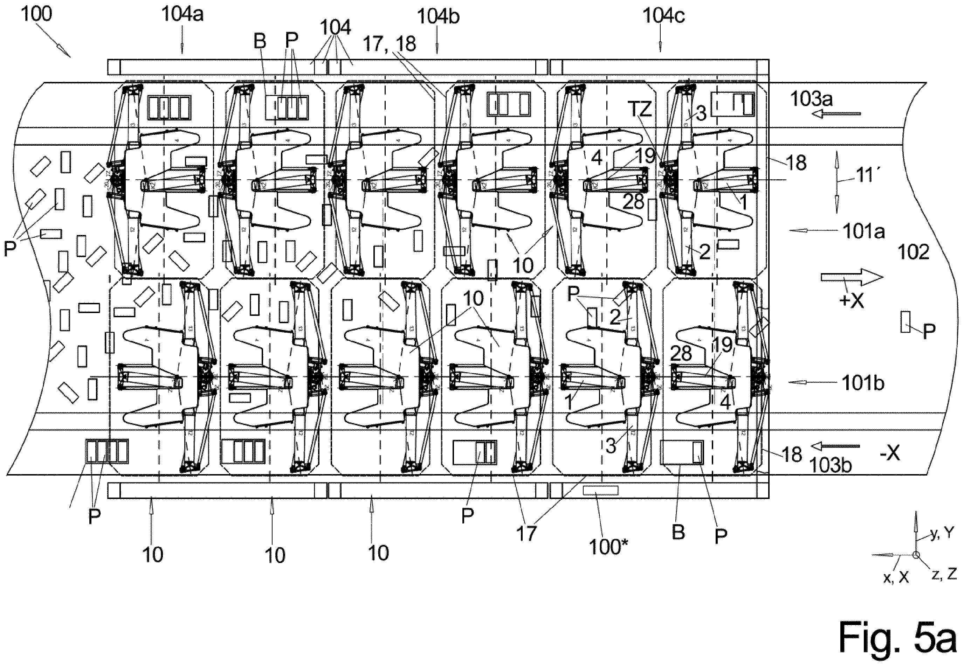

- **Figur 5a:**: eine Darstellung der Roboterstraße gemäß Figur 5a in der Seitenansicht, also betrachtet in der horizontalen Querrichtung zur Durchlaufrichtung der Roboterstraße.

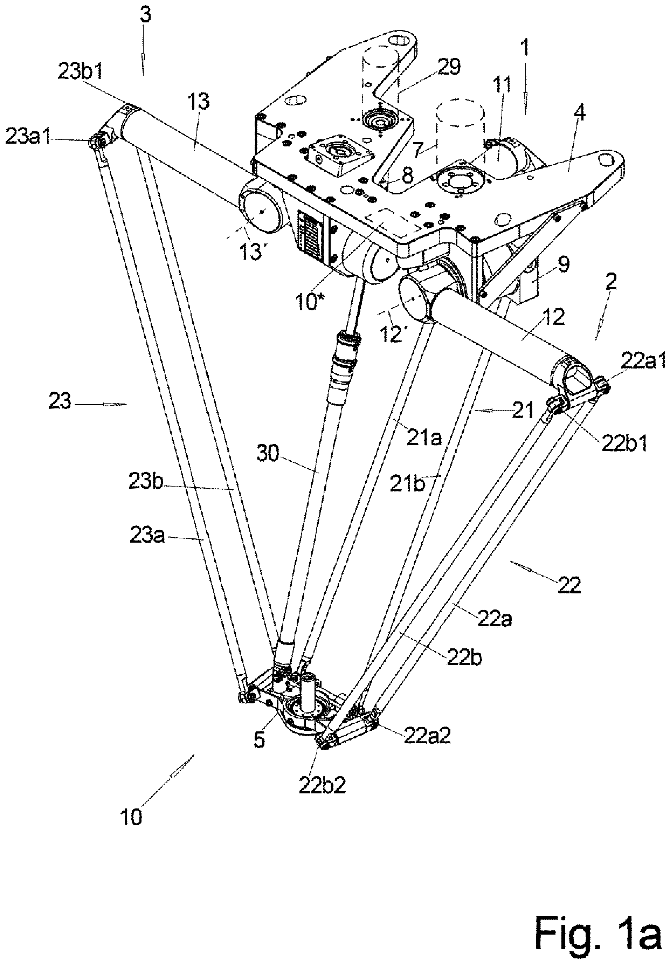

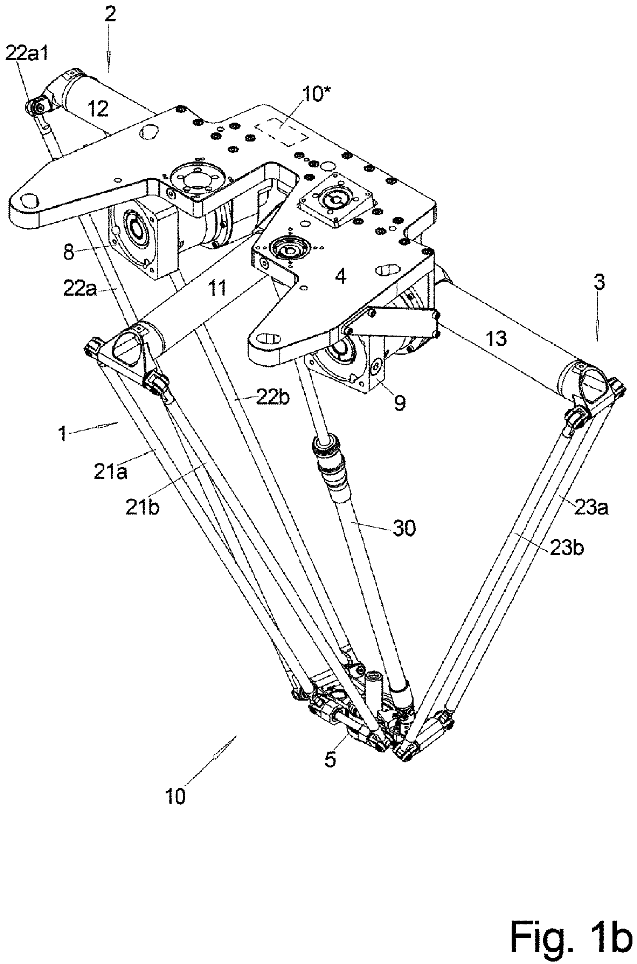

Der auch bei diesem erfindungsgemäßen Industrie-Roboter 10 vorhandenen Grundaufbau eines gattungsgemäßen Industrieroboters 10 mit Parallelkinematik, in diesem Fall in Form eines sogenannten Delta-Roboters 10 aufgrund der vorhandenen drei Roboterarme 1, 2, 3, lässt sich am besten anhand der **Figuren 1a**, **b** erkennen:
Die drei unabhängig voneinander beweglichen, gesteuert antreibbaren, Roboterarme 1, 2, 3, sind jeweils mit ihrem einen Ende schwenkbar um eine Oberarmachse 11', 12', 13' an einer - meist ortsfest montierten - Roboter-Basis 4 befestigt sind und mit ihren drei andere Enden gelenkig an einem Trägerelement 5.

Die Roboterarme 1, 2, 3, bestehen dabei jeweils aus dem an der Roboter-Basis 4 gesteuert schwenkbar befestigten Oberarm 11, 12, 13 und einem, je zwei parallel zueinander verlaufende Unterarm-Stangen 21a, b, 22 a, b, 23 a, b, aufweisenden, Unterarm 21, 22, 23, wobei die drei Antriebseinheiten in Form jeweils eines Rotationsantriebes 7, 8, 9 für das Verschwenken der Oberarme 11, 12, 13 an der Roboter-Basis 4 befestigt sind, während die Unterarme 21, 22, 23 nicht aktiv von einem Motor angetrieben werden.

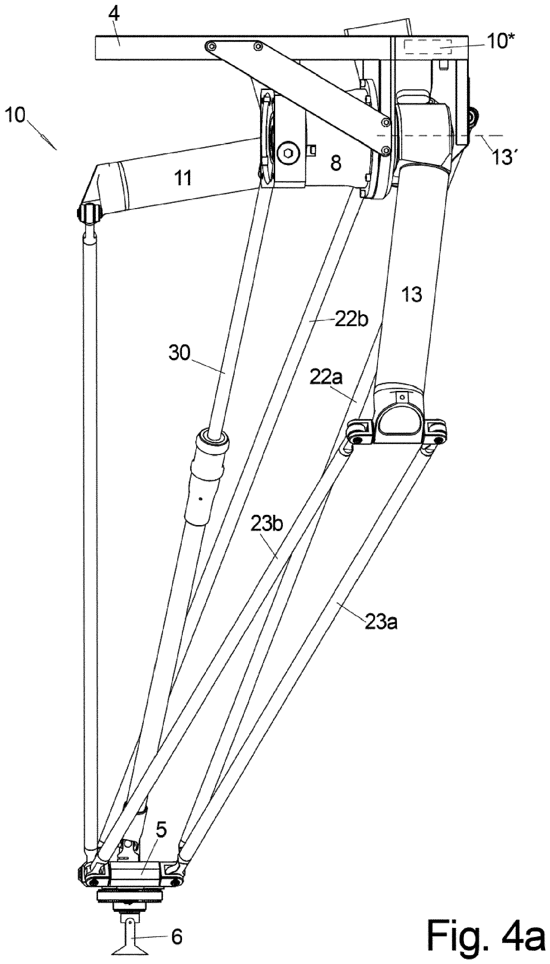

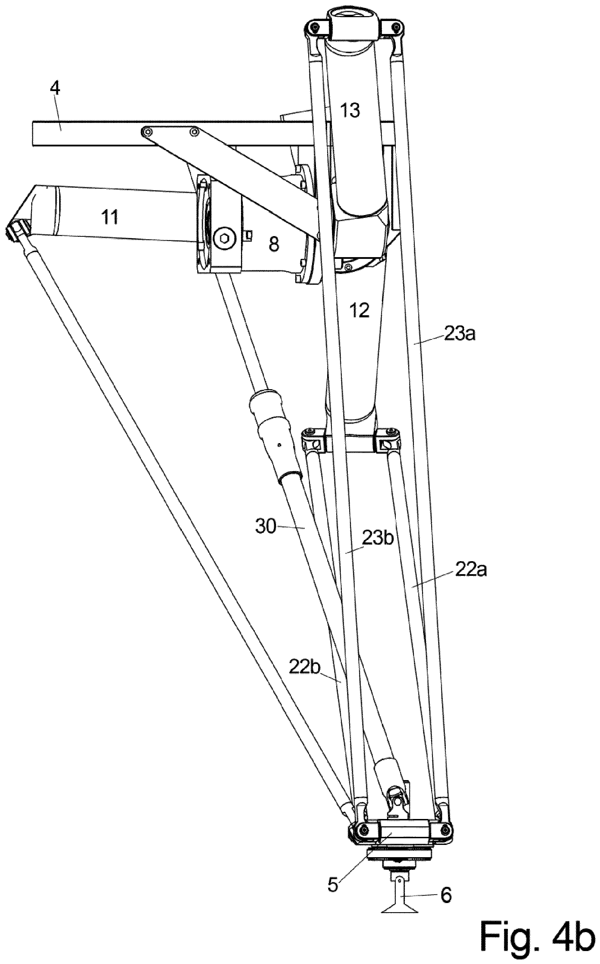

Die drei Paare von Unterarm-Stangen 21a, b, 22 a, b, 23 a, b, bewirken eine räumliche Parallellogrammführung des Trägerelements 5, dessen Trägerelement-Ebene 5' unabhängig von seiner Positionierung im Raum somit immer parallel zur Basis-Ebene 4' liegt, was am besten die **Figuren 4a**, **b** zeigen.

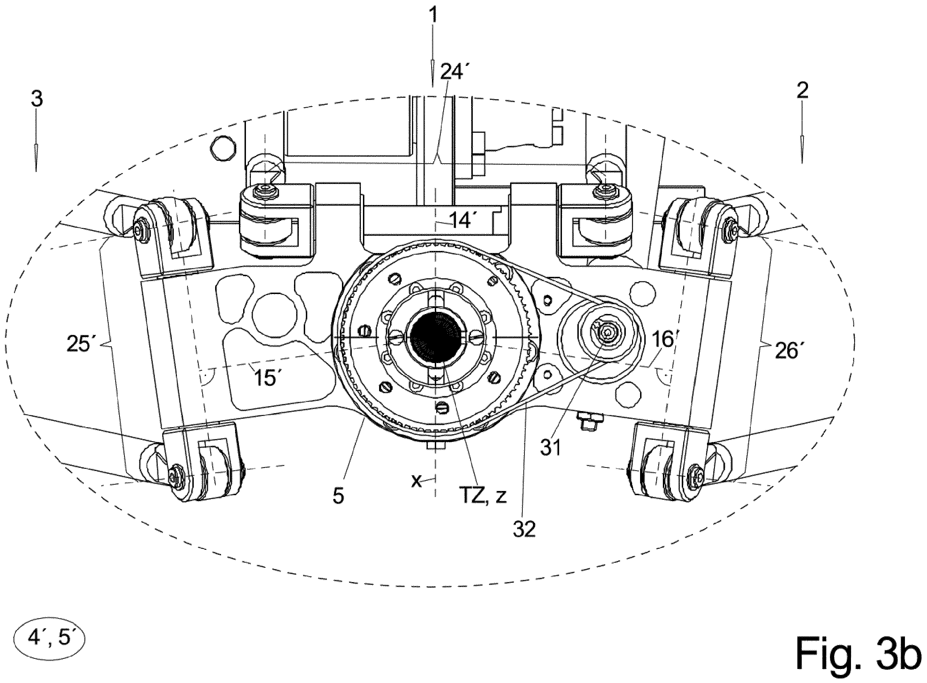

Hierfür sind die Oberarmachsen 11, 12, 13 nur einachsige Gelenke und die an den Unterarm-Stangen 21a, b, 22 a, b, 23 a, b, jeweils beidends angeordneten Gelenke mehrachsige Gelenke, insbesondere Kugelgelenke oder die in **Figur 3b** dargestellten Kardan-Gelenke.

Dabei sind diese Unterarmgelenke an dem der Roboter-Basis 4 zugewandten Ende als basisseitige Unterarmgelenke 21a1, 21b1, 22a1 usw. bezeichnet und an dem dem Träger-Element 5 zugewandten Ende als trägerseitige Unterarmgelenke 21a2, 21b2, 22a2 usw. bezeichnet.

Die trägerseitigen Unterarmgelenke 21a2, 21b2, 22a2 usw. und ebenso deren Gelenkstrecken 24', 25', 26' zwischen je einem Paar 21a2 und 21b2, 22a2 und 22b2, 23a2 und 23b2, von trägerseitigen Unterarmgelenken 21a2, 21b2, 22a2 liegen in einer gemeinsamen Ebene, der Träger-Ebene 5'. Die in dieser Träger-Ebene 5' liegenden, auf den Gelenkstrecken 24', 25', 26' errichteten Mittelsenkrechten 14', 15', 16' treffen sich in einem Punkt, der als Trägerzentrum TZ bezeichnet wird.

Die Summe aller Positionen, die dieses Trägerzentrum TZ aufgrund der Dimensionierung und Anordnung der Bauteile des Roboters 10 erreichen könnte - der ein dreidimensionaler Arbeitsbereich ist - ist in der Praxis nicht nutzbar, da abhängig von der Last am Roboterarm in bestimmten Bereichen das Trägerelement nicht mehr stabil geführt werden könnte sondern kippen würde. Jeder Roboterhersteller gibt daher in Abhängigkeit von der Traglast einen demgegenüber reduzierten, zulässigen Arbeitsbereich 17 vor. Als Mittelpunkt 19 dieses 3-dimensionalen Arbeitsbereiches 17 wird der Mittelpunkt 19 der Projektion 18 des Arbeitsbereiches 17 auf die x-y-Ebene definiert. Insbesondere falls diese Projektion 18 eine geometrisch nicht bestimmte Form aufweist, kann als Mittelpunkt 19 der Schwerpunkt der Fläche dieser Projektion 18 gewählt werden.

An einem solchen Delta-Roboter 10 ist üblicherweise ein Roboter-Koordinatensystem x-y-z wie folgt definiert:
- Mindestens zwei, meist alle drei, der Oberarmachsen 11', 12' 13' und/oder mindestens vier, meist alle sechs, der trägerseitigen Gelenke an dem Trägerelement 5 liegen jeweils in einer gemeinsamen Ebene, der Basis-Ebene 4' einerseits und der Träger-Ebene 5' andererseits, welche parallel zueinander liegen und die Ausrichtung der x-y-Ebene festlegen, wobei die z-Richtung hierauf senkrecht steht.

Als kinematisches Zentrum KZ wird eine Gerade bezeichnet, die parallel zur z-Richtung verläuft und die Schnittlinie dreier Ebenen ist, die durch die Mitten der Verbindungsstrecken 24, 25, 26 zwischen je einem Paar von basisseitigen Unterarmgelenken und lotrecht zu diesen verläuft.

Als konkrete Lage der z-Achse wird dieses kinematisches Zentrum KZ festgelegt, und als Ursprung des Roboter-Koordinatensystems x-y-z der Schnittpunkt des kinematisches Zentrums KZ mit der Basis-Ebene 4'.

An dem Trägerelement 4 wird der für die jeweilige Arbeitsaufgabe benötigte Endeffektor, beispielsweise ein Werkzeug in Form des in **Figur 4a****, b** angedeuteten Saugers 27 als Greifer zum Ergreifen von Produkten P durch Ansaugen befestigt, der zu diesem Zweck in aller Regel von dem Trägerelement 5 aus nach unten, also von der Roboterbasis wegweisend, abstrebt.

Ausgehend von diesen gattungsgemäßen Elementen und Definitionen weist der dargestellte beispielhafte erfindungsgemäße Roboter 10 folgende Besonderheiten auf, die bewirken, dass der mechanische Arbeitsbereich 17 in der Aufsicht betrachtet in y-Richtung länglich wird und dennoch die Ellbogen-Gelenke, gebildet durch die basis-seitigen Unterarm-Gelenke, in keiner Funktionsstellung des Roboters 10 über diesen Arbeitsbereich 17 hinaus vorstehen:
Während gattungsgemäße Delta-Roboter in der Aufsicht betrachtet in aller Regel insofern symmetrisch ausgebildet sind, als das durch die drei Oberarmachsen gebildete Dreieck ein gleichseitiges Dreieck ist und somit drei gleiche Zwischenwinkel aufweist, ist beim dargestellten erfindungsgemäßen Roboter 10 ein Zwischenwinkel α1 kleiner als die beiden übrigen Zwischenwinkel α2 und α3, die ihrerseits gleich groß sind.

Dadurch ist der erfindungsgemäße Roboter 10 in der Aufsicht betrachtet nur noch seitensymmetrisch zur Winkelhalbieren 20 dieses kleineren Zwischenwinkels α1, weshalb die Winkelhalbiere 20 hier auch als x-Achse festgelegt wird, sodass die x-z-Ebene die Symmetrieebene ist.

Des Weiteren sind erfindungsgemäß bei dem dargestellten Roboter 10 dessen Bauteile so dimensioniert und angeordnet und ebenso die Gelenke und Schwenkachsen, dass der Mittelpunkt 19 der Projektion 18 des Arbeitsbereiches 17 nicht auf dem kinematischen Zentrum KZ, welches eine Gerade ist, liegt, sondern hierzu beabstandet, also abseits.

Wie ersichtlich, ist der Mittelpunkt 19 gegenüber dem kinematischen Zentrum KZ in x-Richtung versetzt, und zwar in Richtung der basis-seitigen Gelenke 21a1 und 21b1 des Roboterarmes 1, der zwischen den beiden symmetrisch zur x-Achse angeordneten anderen Roboterarmen 2 und 3 liegt.

Der Oberarm 11 des etwa in Richtung der Mittelsenkrechten 20 des kleineren Zwischenwinkels α1 verlaufenden Roboterarmes 1 ist zudem kürzer nach wahlweise eine der beiden nachfolgenden Definitionen als die beiden anderen - insbesondere gleich langen - Oberarme 12, 13:
Die Länge eines Oberarmes kann definiert werden als ein Abstand ausgehend von der Verbindungsstrecke 24, 25, 26 der basis-seitigen Gelenke des jeweiligen Unterarmes, wobei diese Verbindungsstrecke oft verkürzt auch als Unterarm-Achse bezeichnet wird, was jedoch nicht korrekt ist, da der Unterarm gegenüber dem jeweiligen Oberarm nicht nur um eine Achse beweglich ist.

Wird dieser Abstand gegenüber der Mittelsenkrechten durch den Mittelpunkt 19 der Projektion 18 des Arbeitsbereich 17 gemessen, so wird er mit d1, d2, d3 für den jeweiligen Roboterarm 1, 2, 3 bezeichnet.

Wird dieser Abstand gegenüber dem kinematischen Zentrum KZ gemessen, so wird er mit s1, s2, s3 für den jeweiligen Roboterarm 1, 2, 3 bezeichnet.

Diese Abstände ändern sich mit der Schwenkstellung des jeweiligen Oberarmes 11, 12, 13.

Die maximal erreichbare Größe des Abstandes d1 oder s1 eines ersten Roboterarmes 1, insbesondere desjenigen Roboterarmes 1, dessen Oberarm 11 sich in der Aufsicht betrachtet etwa in x-Richtung erstreckt, ist kleiner als die maximal erreichbare Größe der - hier gleich großen - Abstände d2, d3 oder s2, s3 der beiden übrigen Oberarme 12, 13.

Des Weiteren ist in der Aufsicht betrachtet einer der Roboterarme - insbesondere der Roboterarm 1, der kürzer ausgebildet ist als die beiden anderen Roboter Arme 2, 3 und/oder der Roboterarm 1, dessen Oberarm 11 etwa in Richtung der Winkelhalbierenden 20 des kleinsten Zwischenwinkels α1 verläuft - hinsichtlich der Lage seiner Oberarmachse 11' zu an der Roboter-Basis 4 angeordnet, dass das kinematische Zentrum KZ außerhalb des durch die drei Oberarmachsen 11', 12', 13' gebildeten Basis-Dreieckes liegt.

Anders ausgedrückt, schneidet die Oberarmachse 11' dieses Oberarmes 11 des Roboterarmes 1 das kinematische Zentrum KZ oder die Oberarmachse 11' liegt bezüglich des kinematische Zentrums KZ auf der vom Unterarm 21 dieses Roboterarmes 1 abgewandten Seite.

Die Roboter-Basis 4, die etwa plattenförmige ausgebildet ist ebenso wie das Trägerelement 5, besitzt in der Aufsicht betrachtet einen zur Umfangskontur hin offenen, also randoffenen, Ausschnitt 28, der sich zumindest teilweise über dem Oberarm 11 des Roboterarmes 1 erstreckt, so dass sich dieser bei einem Hochschwenken über eine zur Basis-Ebene 4' parallele Lage in diesen Ausschnitt 28 hinein erstrecken kann. Die Roboter-Basis 4 besitzt deshalb in der Aufsicht eine etwa U-förmige Gestalt.

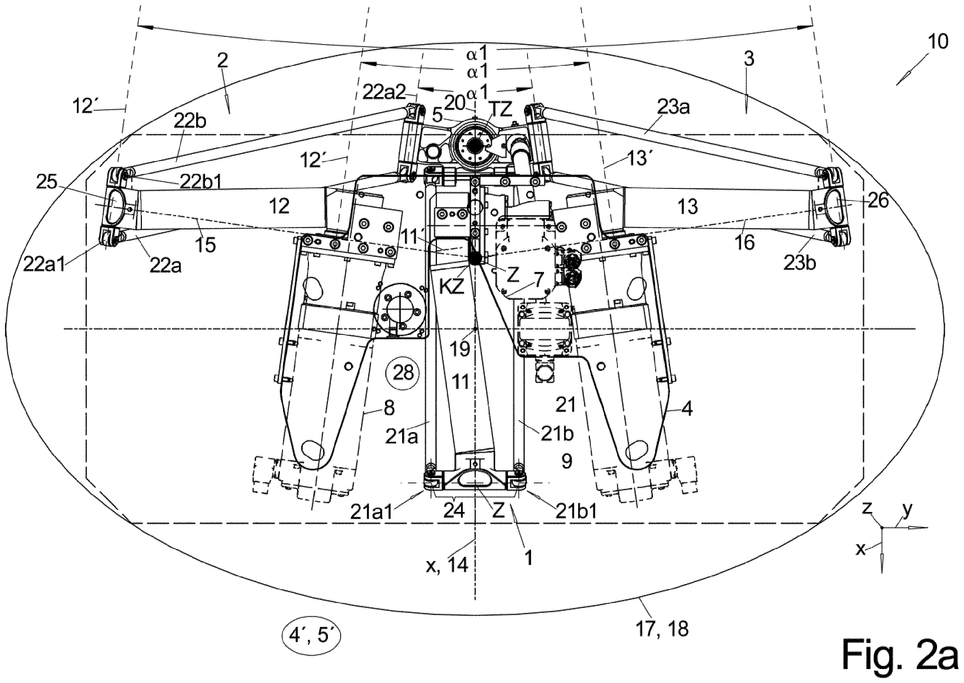

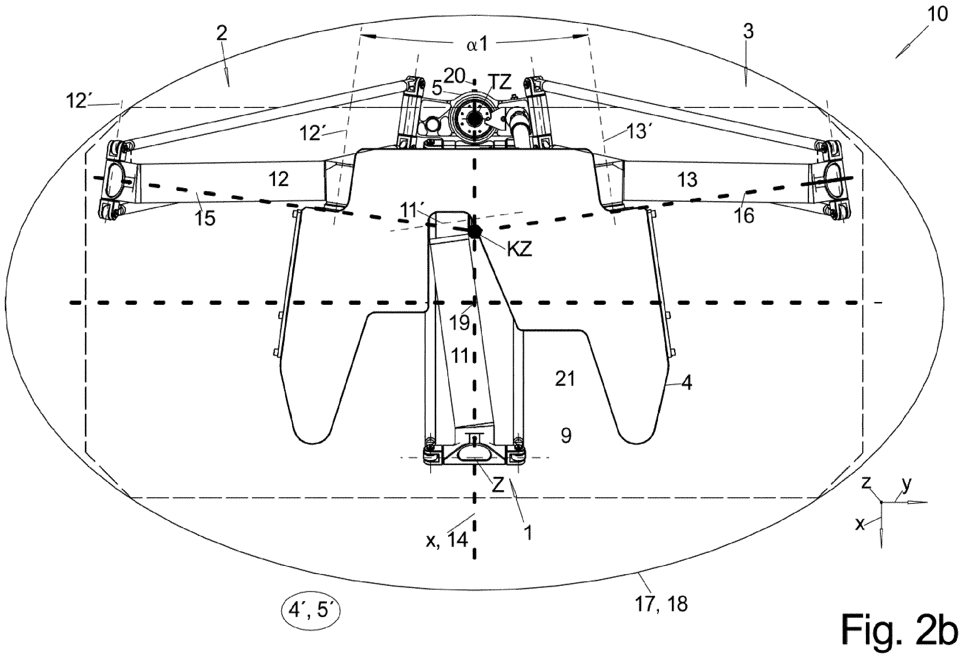

Während bei gattungsgemäßen Delta-Robotern die Verbindungsstrecken zwischen den basisseitigen Unterarmgelenken aller drei Unterarme jeweils gleich groß sind und ebenso die analogen Gelenkstrecken der trägerseitigen Unterarmgelenke, ist dies beim erfindungsgemäßen Roboter nicht der Fall:
In den Figuren, am besten zu erkennen in **Figur 2a****,** ist bei einem der Roboterarme - insbesondere dem Roboterarm 1, der kürzer ausgebildet ist als die beiden anderen Roboter Arme 2, 3 und/oder dem Roboterarm 1, dessen Oberarm 11 etwa in Richtung der Winkelhalbierenden 20 des kleinsten Zwischenwinkels α1 verläuft - die Verbindungsstrecke 24 zwischen den beiden basisseitigen Gelenken 21a1, 21b1 größer, insbesondere mindestens um den Faktor 1,2, besser mindestens um den Faktor 1,5 größer, als die analogen beiden anderen Verbindungsstrecken 25, 26.

Da die Unterarm-Stangen jedes Unterarmes parallel zueinander verlaufen, ist auch am Trägerelement 5 analog die Gelenkstrecke zwischen den beiden trägerseitigen Gelenken 21a2, 21b2 länger als die beiden anderen Gelenkstrecken am Trägerelement 5. Dies stabilisiert die Führung des Trägerelementes 5.

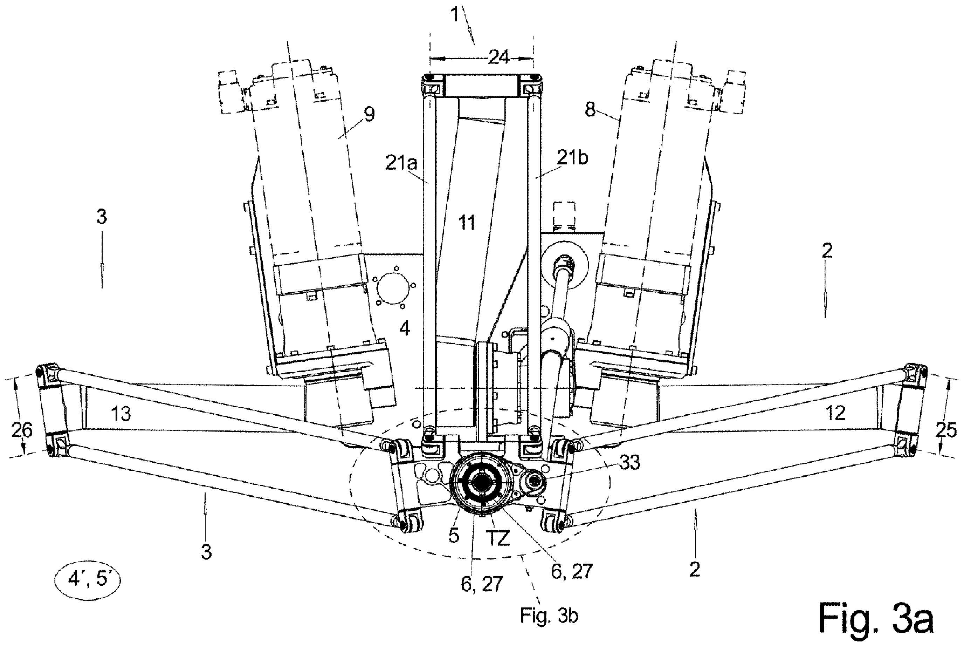

Wie am besten der **Figur 3a** zu entnehmen, sind die Oberarme 11, 12, 13 in der Aufsicht betrachtet geköpft ausgebildet, womit gemeint ist, dass die primäre Erstreckungsrichtung des Oberarmes nicht lotrecht zur Oberarmachse 11', 12', 13' verläuft.

Diese Abweichung von der Lotrechten, also die Kröpfung, ist bei dem Roboterarm 1 - insbesondere dem Roboterarm 1, der kürzer ausgebildet ist als die beiden anderen Roboterarmen 2, 3 und/oder dem Roboterarm 1, dessen Oberarm 11 etwa in Richtung der Winkelhalbierenden 20 des kleinsten Zwischenwinkels α1 verläuft - stärker als bei den anderen beiden Roboterarmen 2, 3, insbesondere mindestens um den Faktor 1,2 größer, besser mindestens um den Faktor 1,5 größer.

Dadurch kann erreicht werden, dass die gesamte Länge Oberarmschwenkachse 11' des Oberarmes 11 abseits der Symmetrieebene, der x-z-Ebene, untergebracht werden kann und dennoch die Verbindungsstrecke 24 zentrisch zur x-Richtung liegt.

Von den in der Regel als elektrisch betriebene Motore ausgebildeten Rotationsantrieben 7, 8, 9 sind die beiden Rotationsantriebe 8, 9, welche die beiden symmetrisch zur x-Richtung angeordneten Roboterarme 2, 3 hinsichtlich ihrer Oberarme 12, 13 antreiben, an der Unterseite der Roboter-Basis 4 angeordnet wobei die Rotationsachsen der beiden Rotationsantriebe 8, 9 insbesondere mit der jeweiligen Oberarmachse 12' 13' fluchtet.

Der dritte Rotationsantrieb 7 ist aus Übersichtlichkeitsgründen nur in **Figur** 1a angedeutet und auf der Oberseite der Roboter-Basis 4 befestigt, und steht mit seiner Rotationsachse entweder im Winkel zur plattenförmigen Roboter-Basis 4 oder verläuft parallel zu dieser, benötigt aber in der Regel immer ein Winkelgetriebe zur Verbindung mit dem Oberarm 11.

Wie die Gelenke der Unterarmstangen ausgebildet sind, ist am besten anhand **Figur 3b** zu erkennen:
Körperlich handelt es sich jeweils um ein Kardangelenk, dessen eines Ende an der jeweiligen Unterarm-Stange drehfest befestigt ist, während das andere Ende
- bei einem trägerseitigen Unterarm-Gelenk schwenkbar in dem Trägerelement 5 gelagert ist um eine Schwenkachse, die in Richtung der Gelenkstrecke 24', 25', 26' zwischen den beiden trägerseitigen Gelenken dieses Unterarmes verläuft. und/oder
- bei einem basisseitigen Unterarm-Gelenk schwenkbar in dem jeweiligen Oberarm gelagert ist um eine Schwenkachse, die in Richtung der entsprechenden Verbindungsstrecke 24, 25 oder 26 zwischen den beiden basisseitigen Gelenken dieses Unterarmes verläuft.

**Figur 3b** zeigt ferner, dass das Befestigungselement zum Befestigen eines Endeffektors 7 im Träger-Zentrum TZ angeordnet ist, und abseits davon ein Drehmoment zu einer Kupplung 31 am Trägerelement 5 übertragen wird:
Hierfür ist eine teleskopierbare Antriebswelle 30 zwischen dem Trägerelement 5 und der Roboter-Basis 4 vorhanden, die an jedem Ende ein Kardangelenk trägt und am trägerseitigen Ende, beispielsweise über einen Riementrieb 32, mit dem Befestigungselement zum Befestigen eines Endeffektors wirkverbunden ist und am basisseitigen Ende mit einem Drehantrieb 29 wirkverbunden ist, der in der Regel auf der Oberseite der Roboter-Basis 4 befestigt ist und nur in **Figur 1a** angedeutet ist.

Durch die exzentrische Anordnung der Drehmoment-Übertragung zum Trägerelement 5 - die beispielsweise benötigt wird, um ein dort als Endeffektor 6 befestigtes Werkzeug in Rotation zu versetzen - bleibt das Trägerzentrum TZ frei für die Anordnung einer Energiezufuhr in Form eines Pneumatik-Schlauches oder elektrischen Kabels, die somit optimal weit entfernt von den Roboterarmen 1, 2, 3 in der Mitte des Roboters 10 gehalten werden können und insbesondere lose an der Antriebswelle 30 gehalten sein können, eventuell um diese herum gewunden sein können.

Die **Figuren 4a**, **b** zeigen den Roboter 10 in der Seitenansicht, also betrachtet in y-Richtung in 2 verschiedenen Funktionsstellungen, so dass sich also das Trägerelement 4 zumindest in x- und z- Richtung in unterschiedlichen Positionen befindet. Damit kann der daran befestigte Endeffektor 6, in diesem Fall ein Sauger 27, an unterschiedliche Positionen gebracht werden, der in diesem Fall zusätzlich um die z- Richtung drehbar sowie um eine in der x-y- Ebene liegende Schwenkachse schwenkbar gegenüber dem Trägerelement 4 ist.

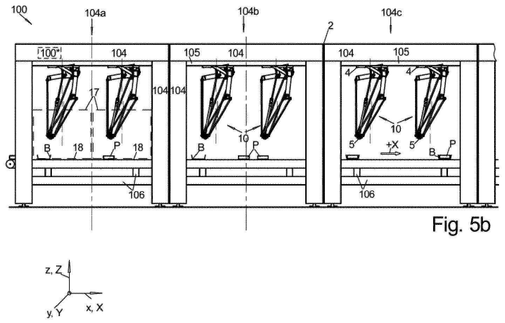

Die **Figuren 5a**, **b** zeigen eine Roboterstraße mit darin angeordneten Robotern gemäß der vorhergehenden Figuren in der Aufsicht und in der Seitenansicht.

Die Roboter 10 sind hängend in einem Gestell 104 der Roboterstraße 100 angeordnet, welches aus in Durchlaufrichtung X hintereinander angeordneten Gestell-Modulen 104a, b, c besteht. Jedes Modul besteht - wie am besten in Figur 5a zu erkennen - aus vier in der Aufsicht betrachtet in den Ecken eines Rechteck angeordneten vertikal stehenden Tragsäulen, deren obere enden durch Längstraversen und Quertraversen miteinander verbunden sind.

Die Roboter 10 sind mit ihrer Basis 4 und dem von dort sich nach unten erstreckenden Roboterarm ein an einem oberen Tragwerk 105 befestigt, welches am Gestell 104 nahe der oberen Traversen befestigt ist.

Im unteren Bereich des gestellt ist, also unterhalb der Roboter 10, ist am Gestell 104 ein unteres Tragwerk 106 befestigt, wie in **Figur 5b** ersichtlich bestehend aus Längsstreben und Querstreben.

Wie aus Figur 5a ersichtlich, liegt auf diesen unteren Tragwerk 105 zum einen ein in diesem Fall in der Längsmitte der Roboterstraße 100 verlaufendes Produktband 102 auf, dessen Obertrum in der positiven Durchlaufrichtung +X läuft und von links darauf liegende Produkte P heran transportiert. Die Produkte P sollen von den Robotern 10 in Behälter wie umgesetzt werden, welche auf in der Aufsicht der **Figur 5a** betrachtet beidseits des Produktbandes 102 angeordneten Behälterbändern 103a, b in der Gegenrichtung, also in der negativen Durchlaufrichtung -X, herangeführt werden.

Hierfür sind in der Aufsicht betrachtet eine Vielzahl von Robotern 10 in zwei in Durchlaufrichtung X verlaufenden und in Querrichtung Y nebeneinander parallel angeordneten Roboterlinien 101a, b in der Roboterstraße 100, also innerhalb des Gestells 104, so angeordnet, dass die Projektion 18 von deren zulässigen Arbeitsbereichen 17 auf die x-y-Ebene mit ihrer größten Erstreckung in Querrichtung Y und mit ihrer kleinsten Erstreckung in Durchlaufrichtung X der Roboterstraße 100 liegen.

Erfindungsgemäß sind die Projektionen 18 der zulässigen Arbeitsbereiche 17 einer Roboterlinie 101a, b mit nur geringen Lücken in X-Richtung hintereinander angeordnet, während die Projektionen 18 zweier etwa auf der gleichen X-Position angeordneter Roboter 10 der beiden verschiedenen Roboterlinien einander in Querrichtung Y berühren oder wie hier dargestellt geringfügig überlappen.

Die nur bezüglich ihrer x-z-Ebene symmetrischen Roboter 10 besitzen jeweils zwei symmetrisch zu dieser Symmetrieebene angeordnete Roboterarme 2, 3 sowie einen etwa entlang dieser Symmetrieebene angeordneten Roboterarm 1 sowie eine in der Aufsicht betrachtet etwa U-förmige Roboterbasis 4 mit einem Ausschnitt 28 zwischen den Schenkeln der U-Form.

Erfindungsgemäß sind weiterhin innerhalb jeder der beiden Roboterlinien 101a, b die Roboter 10 mit jeweils der gleiche Orientierung angeordnet, also in diesem Fall in der in **Figur 5a** oberen Roboterlinie 101a mit dem Ausschnitt 28 der U-förmigen Roboterbasis 4 nach rechts, also in der positiven Durchlaufrichtung +X weisend. Dagegen sind in der unteren Roboterlinie 101b die Roboter 10 um 180° gedreht, also hier mit dem Ausschnitt 28 nach links, in der negativen Durchlaufrichtung -X weisend, angeordnet.

Dadurch sind bei zwei etwa auf der gleichen X-Position, aber in den beiden verschiedenen Roboterlinien 101a, b, angeordneten Robotern 10 und deren Projektionen 18 ihrer Arbeitsbereiche 17 - die sich in X-Richtung etwa in dem gleichem Bereich erstrecken - die jeweils symmetrischen Roboterarme 2, 3 dieser beiden Roboter 10 in X-Richtung zueinander versetzt und können - bei Überlappung der Projektionen 18 in Querrichtung Y - in dieser Querrichtung Y sogar überlappen, ohne dass diese beiden Roboter 10 im Betrieb kollidieren.

### BEZUGSZEICHENLISTE

- 1: Roboterarm
- 2: Roboterarm
- 3: Roboterarm
- 4: Roboter-Basis
- 4': Basis-Ebene
- 5: Trägerelement
- 5': Träger-Ebene
- 6: Endeffektor
- 7: Rotationsantrieb
- 8: Rotationsantrieb
- 9: Rotationsantrieb
- 10: Industrie-Roboter, Roboter
- 10*: Steuerung, Roboter-Steuerung
- 11: Oberarm
- 11': Oberarmachse
- 12: Oberarm
- 12': Oberarmachse
- 13: Oberarm
- 13': Oberarmachse
- 14, 14': Mittelsenkrechte
- 15, 15': Mittelsenkrechte
- 16, 16': Mittelsenkrechte
- 17: Arbeitsbereich
- 18: Projektion des Arbeitsbereichs
- 19: Mittelpunkt des Arbeitsbereichs
- 20: Winkelhalbierende
- 21: Unterarm
- 21a, b: Unterarm-Stange
- 21a1: antriebsseitiges Unterarmgelenk
- 21a2: trägerseitiges Unterarmgelenk
- 22: Unterarm
- 22a, b: Unterarm-Stange
- 22a1: antriebsseitiges Unterarmgelenk
- 22a2: trägerseitiges Unterarmgelenk
- 23: Unterarm
- 23a, b: Unterarm-Stange
- 23a1: antriebsseitiges Unterarmgelenk
- 23a2: trägerseitiges Unterarmgelenk
- 24: Verbindungsstrecke
- 25: Verbindungsstrecke
- 26: Verbindungsstrecke
- 24': Gelenkstrecke
- 25': Gelenkstrecke
- 26': Gelenkstrecke
- 27: Sauger
- 28: Ausschnitt
- 29: Drehantrieb
- 30: Antriebswelle
- 31: Kupplung
- 32: Riementrieb

- 100: Roboter-Straße
- 100*: Steuerung, Straßen-Steuerung
- 101a, b: Roboter-Linie
- 102: Produktband
- 103a, b: Behälterband
- 104: Gestell
- 104a-c: Gestell-Modul
- 105: oberes Tragwerk
- 106: unteres Tragwerk

- α1, α2, α3: Winkel, Zwischenwinkel
- di,max: Abstand
- si,max: Abstand
- B: Behälter
- P: Produkt
- TZ: Träger-Zentrum
- KZ: kinematisches Zentrum
- x, y, z: Roboter-Koordinatensystem
- X, Y, Z: Straßen-Koordinatensystem

## Patentansprüche

1. Industrie-Roboter mit Parallelkinematik
a) mit einer Roboterbasis (4),
b) mit einem Trägerelement (5), welches einen Endeffektor (6) aufnehmen kann,
c) mit drei beweglichen Roboterarmen (1, 2, 3),
d) wobei jeder Roboterarm (1, 2, 3), einen an der Roboterbasis (4) angeordneten Rotationsantrieb (7, 8, 9), einen durch den Rotationsantrieb (7, 8, 9) zur Rotation um eine Oberarmachse (11', 12', 13`) angetriebenen Oberarm (11, 12, 13) und einen am Oberarm (11, 12, 13) beweglich angeordneten Unterarm (21, 22, 23) aufweist,
e) wobei jeder Unterarm (21, 22, 23) zwei parallele Unterarm-Stangen (21a, b, 22a, b, 23a, b) aufweist und jede Unterarm-Stange über ein basisseitiges Unterarmgelenk beweglich mit dem Oberarm (11, 12, 13) und über ein trägerseitiges Unterarmgelenk (21a2, 21b2, 22a2, 22b2, 23a2, 23b2) beweglich mit dem Trägerelement (4) verbunden ist,
f) wobei die Zentren der trägerseitigen Unterarmgelenke (21a2, 21b2, 22a2, 22b2, 23a2, 23b2) aller Unterarm-Stangen (21a, b, 22a, b, 23a, b) in einer gemeinsamen Trägerelement-Ebene (5`) liegen, welche senkrecht zu einer z-Achse eines Roboter-Koordinatensystems (x-y-z) verläuft und parallel zu einer durch eine x-Achse und eine y-Achse des Roboter-Koordinatensystems aufgespannten x-y-Ebene,
g) wobei die Oberarmachsen (11', 12', 13') der drei Roboterarme (1, 2, 3) in einer Projektion auf die x-y-Ebene ein Dreieck aufspannen,
h) wobei einer der drei Zwischenwinkel (α1) kleiner ist als die beiden anderen und somit den kleinsten Zwischenwinkel (α1) bildet, der kleiner ist als 25°,
- wobei die beiden Oberarmachsen (12', 13`), welche den kleinsten Zwischenwinkel (α1) begrenzen, in einer gemeinsamen Basis-Ebene (4`) verlaufen, welche die x-y-Ebene ist, und der Schnittpunkt der z-Achse mit dieser x-y-Ebene dem Nullwert der z-Achse entspricht.
- wobei der Mittelpunkt (19) der Projektion eines dreidimensionalen zulässigen Arbeitsbereichs (17) des Industrieroboters auf die x-y-Ebene abseits des kinematischen Zentrums (KZ) des Industrieroboters (10) liegt,
- wobei der zulässige Arbeitsbereich (17) des Industrieroboters (10) der Menge aller möglichen Positionen eines Trägerelement-Zentrums (TZ) des Industrieroboters bei einer Bewegung der Roboterarme (1, 2, 3) entspricht,
- wobei das Trägerelement-Zentrum (TZ) der Schnittpunkt der in der Trägerelement-Ebene (5`) liegenden Mittelsenkrechten (14', 15', 16') auf die Gelenkstrecken (24', 25', 26') der Zentren der beiden trägerseitigen Unterarmgelenke (21a2, 21b2, 22a2, 22b2, 23a2, 23b2) der Roboterarme (1, 2, 3) ist, und
- wobei das kinematische Zentrum (KZ) eine zur z-Achse parallele Gerade ist, in der sich die drei Ebenen schneiden, welche jeweils durch die Mitten der Verbindungsstrecken (24, 25, 26) der Zentren der beiden basisseitigen Unterarmgelenke (21a1, 21b1, 22a1, 22b1, 23a1, 23b1) eines Roboterarms und senkrecht zu dieser Verbindungsstrecke (24, 25, 26) verlaufen.

2. Industrieroboter nach Anspruch 1,
**dadurch gekennzeichnet, dass**
der kleinste Zwischenwinkel (α1) kleiner ist als 20°, bevorzugt kleiner als 18°, besonders bevorzugt kleiner gleich 16°.

3. Industrieroboter nach Anspruch 2,
**dadurch gekennzeichnet, dass**
- die Winkelhalbierende (20) durch den kleinsten (α1) der drei Zwischenwinkel (α1, α2, α3) die x-Achse des Roboterkoordinatensystems ist.

4. Industrieroboter nach einem der vorhergehenden Ansprüche,
**dadurch gekennzeichnet, dass**
- der Schnittpunkt des kinematischen Zentrums (KZ) mit der Basis-Ebene (4`) der Nullpunkt der z-Achse und insbesondere der Nullpunkt des x-y-z-Roboter-Koordinatensystems ist.

5. Industrieroboter nach einem der vorhergehenden Ansprüche,
**dadurch gekennzeichnet, dass**
- der Mittelpunkt (19) der Projektion (18) der geometrische Schwerpunkt der Projektions-Fläche ist,
- insbesondere die Projektion (18) des Arbeitsbereichs (17) im Wesentlichen ein Rechteck ist.

6. Industrieroboter nach einem der vorhergehenden Ansprüche,
**dadurch gekennzeichnet, dass**
- der Abstand di,max der größtmögliche Abstand zwischen der Verbindungsstrecke (24, 25, 26) der Zentren der basisseitigen Unterarmgelenke (21a1, 21b1, 22a1, 22b1, 23a1, 23b1) des i-ten Roboterarms einerseits und der Mittelsenkrechten durch den Mittelpunkt (19) der Projektion (18) des Arbeitsbereichs (17) auf die x-y-Ebene andererseits bei einer Rotation des Oberarms (11, 12, 13) des i-ten Roboterarms (1, 2, 3) um seine Oberarmachse (11', 12', 13') ist, wobei i e {1, 2, 3}, und
- d1,max des ersten Roboterarms (1) kleiner ist als d2,max des zweiten Roboterarms (2) und kleiner ist als d3,max des dritten Roboterarms (3), und
- insbesondere d2,max des zweiten Roboterarms (2) und d3,max des dritten Roboterarms (3) gleich groß sind.

7. Industrieroboter nach einem der Ansprüche 1 bis 5,
**dadurch gekennzeichnet, dass**
- der Abstand si,max der größtmögliche Abstand zwischen der Verbindungsstrecke (24, 25, 26) der Zentren der basisseitigen Unterarmgelenke (21a1, 21b1, 22a1, 22b1, 23a1, 23b1) des i-ten Roboterarms einerseits und dem kinematischen Zentrum (KZ) andererseits bei einer Rotation des Oberarms (11, 12, 13) des i-ten Roboterarms um seine Oberarmachse (11', 12', 13`) ist, wobei i e {1, 2, 3}, und
- dass s1,max des ersten Roboterarms (1) kleiner ist als s2,max des zweiten Roboterarms (2) und kleiner ist als s3,max des dritten Roboterarms (3), und
- insbesondere s2,max des zweiten Roboterarms (2) und s3,max des dritten Roboterarms (3) gleich groß sind.

8. Industrieroboter nach einem der vorhergehenden Ansprüche,
**dadurch gekennzeichnet, dass**
das Massenträgheitsverhältnis aus Massenträgheitsmoment des Rotationsantriebs um dessen Rotationsachse zu Massenträgheitsmoment des durch den Rotationsantrieb (7, 8, 9) angetriebenen Roboterarm (1, 2, 3) um dessen Oberarmachse (11', 12', 13`) bei dem ersten Roboterarm (1) verschieden ist von dem Massenträgheitsverhältnis des zweiten Roboterarms (2) und verschieden ist von dem Massenträgheitsverhältnis des dritten Roboterarms (3), insbesondere wenn bei den drei Roboterarmen die gleiche Stellung zwischen Oberarm und Unterarm vorliegt.

9. Industrieroboter nach Anspruch 8,
**dadurch gekennzeichnet, dass**
- das Massenträgheitsverhältnis des ersten Roboterarms (1) größer ist als das Massenträgheitsverhältnis des zweiten Roboterarms (2) sowie des dritten Roboterarms (3), und
- insbesondere das Massenträgheitsverhältnis des zweiten Roboterarms (2) und das Massenträgheitsverhältnis des dritten Roboterarms (3) gleich groß sind.

10. Industrieroboter nach einem der vorhergehenden Ansprüche,
**dadurch gekennzeichnet, dass**
- das Massenträgheitsmoment des Rotationsantriebes (7) bei einem Roboterarm, insbesondere dem ersten Roboterarm (1), größer ist als bei den beiden anderen Roboterarmen (2,3),
- wobei das Massenträgheitsmoment der Rotationsantriebe (8, 9) vorzugsweise bei den beiden anderen Roboterarmen gleich groß ist.

11. Industrieroboter nach einem der vorhergehenden Ansprüche,
**dadurch gekennzeichnet, dass**
- bei einem der Roboterarme der Abstand zwischen den Zentren der basisseitigen Unterarmgelenke und/oder der trägerseitigen Unterarmgelenke größer ist als bei den beiden anderen Roboterarmen,
- insbesondere dass bei dem ersten Roboterarm der Abstand größer ist als bei dem zweiten Roboterarm und bei dem dritten Roboterarm, und dass der Abstand bei dem zweiten und dritten Roboterarm gleich ist.

12. Industrieroboter nach einem der vorhergehenden Ansprüche,
**dadurch gekennzeichnet, dass**
das Trägerelement entlang der y-Achse eine größere Ausdehnung aufweist als entlang der x-Achse
und/oder
- die Oberarmachsen aller drei Roboterarme in einer gemeinsamen Basis-Ebene liegen.

13. Industrieroboter nach einem der vorhergehenden Ansprüche,
**dadurch gekennzeichnet, dass**
- bei mindestens einem Roboterarm die primäre Erstreckungsrichtung des Oberarmes unter einem von 90° verschiedenen Winkel zur zugehörige Oberarmachse verläuft,
- insbesondere dass bei allen drei Roboterarmen die primäre Erstreckungsrichtung des Oberarms unter einem von 90° verschiedenen Winkel gegen die zugehörige Oberarmachse verläuft.

14. Industrieroboter nach einem der vorhergehenden Ansprüche,
**dadurch gekennzeichnet, dass**
- an dem Trägerelement neben einer Befestigungsvorrichtung zum Befestigen eines Endeffektors seitlich versetzt mindestens eine Kupplung angeordnet ist, an welcher ein Übertragungselement, insbesondere eine Antriebswelle, koppelbar ist
und/oder
- die Roboterbasis als Platte ausgebildet ist.

15. Industrieroboter nach einem der vorhergehenden Ansprüche,
**dadurch gekennzeichnet, dass**
- zwei der Rotationsantriebe an der dem Trägerelement zugewandten Seite der der Roboterbasis, insbesondere der Platte, angeordnet ist, und dass ein Rotationsantrieb an der dem Trägerelement abgewandten Seite der Roboterbasis, insbesondere der Platte, angeordnet ist,
insbesondere
- der Rotationsantrieb, welcher an der dem Trägerelement abgewandten Seite der Platte angeordnet ist, mit einem Winkelgetriebe ausgestattet ist.

16. Industrieroboter nach einem der vorhergehenden Ansprüche,
**dadurch gekennzeichnet, dass**
- die insbesondere als Platte ausgebildete Roboterbasis einen randoffenen Ausschnitt für mindestens einen der Oberarme aufweist,
- insbesondere einen randoffenen Ausschnitt für den ersten Roboterarm aufweist.

17. Industrieroboter nach einem der vorhergehenden Ansprüche,
**dadurch gekennzeichnet, dass**
- bei mindestens einem Roboterarm, insbesondere dem ersten Roboterarm, die Oberarmachse in der Aufsicht betrachtet durch das kinematische Zentrum verläuft oder auf der bezüglich der basisseitigen Unterarmgelenke des Unterarmes dieses Roboterarmes abgewandten Seite des kinematischen Zentrums verläuft,
- oder das kinematische Zentrum zwischen der Oberarmachse und der Verbindungsgeraden durch die Zentren der antriebsseitigen Unterarmgelenke verläuft.

18. Industrieroboter nach einem der vorhergehenden Ansprüche,
**dadurch gekennzeichnet, dass**
die Roboterarme so dimensioniert und an der Roboterbasis positioniert sind, dass unabhängig von der Schwenkstellung der Oberarme keines der basisseitigen Unterarmgelenke über die Projektion des Arbeitsbereichs auf die x-y-Ebene in der Aufsicht betrachtet übersteht.

19. Roboterstraße (100) umfassend mindestens eine in der Haupt-Erstreckungsrichtung, der Durchlaufrichtung X, der Roboterstraße (100) verlaufende Roboterlinie (101a, b) entlang der mehrere Roboter (10) nach einem der vorhergehenden Ansprüche hintereinander angeordnet sind, wobei in der Aufsicht betrachtet die Roboter (10) so angeordnet sind, dass
- diejenige Richtung, in der die Projektion (18) des Arbeitsbereiches (17) auf die x-y-Ebene die größte Ausdehnung besitzt, insbesondere die y-Richtung des Roboter-Koordinatensystems x-y-z quer, insbesondere lotrecht, zur Durchlaufrichtung X des Straßen-Koordinatensystems X-Y-Z verläuft
und/oder
- diejenige Richtung, in der die Projektion (18) des Arbeitsbereiches (17) auf die x-y-Ebene die geringste Ausdehnung besitzt, insbesondere die x-Richtung des Roboter-Koordinatensystems x-y-z, in einem spitzen Winkel, insbesondere parallel, zur Durchlaufrichtung X des Straßen-Koordinatensystems X-Y-Z verläuft.

20. Roboterstraße nach Anspruch 19,
**dadurch gekennzeichnet, dass**
die Oberarme der Roboter in der Aufsicht betrachtet bei in die größte horizontale Auskragung bezüglich des kinematischen Zentrums hochgeschwenkten Oberarmen unterschiedlich weit vom kinematischen Zentrum aus abstreben und die Roboter in der Roboterstraße so angeordnet sind, dass der am wenigsten weit vom kinematischen Zentrum aus abstrebende Oberarm immer in die gleiche Richtung weisend, also in oder entgegen der Durchlaufrichtung X, in der Roboterlinie angeordnet werden.

21. Roboterstraße nach einem der Ansprüche 19 bis 20,
**dadurch gekennzeichnet, dass**
- die Steuerung (10*) des Roboters oder die Steuerung (100*) der Roboterstraße (100 den Roboter (10) so bewegt, dass das Trägerzentrums (TZ) nur innerhalb des zulässigen Arbeitsbereichs (17) anfährt,
- insbesondere die Projektion (18) des zulässigen Arbeitsbereiches (17) auf die x-y-Ebene eine etwa rechteckige Grundform besitzt, insbesondere rechteckig ist.

22. Roboterstraße nach einem der Ansprüche 19 bis 21,
wobei die Roboterstraße zwei parallele Roboterlinien umfasst,
**dadurch gekennzeichnet, dass**
die Roboter in der Roboterstraße so angeordnet sind, dass in der einen Roboterlinie der am wenigsten weit vom kinematischen Zentrum aus abstrebende Oberarm immer in die gleiche Richtung weist, also in die Durchlaufrichtung X, und in der anderen Roboterlinie entgegen der Durchlaufrichtung X.

23. Roboterstraße nach Anspruch 22,
**dadurch gekennzeichnet, dass**
- zwei in den beiden benachbarten Roboterlinien angeordnete, in Durchlaufrichtung X auf der gleichen Längsposition oder hinsichtlich ihrer Längsposition zueinander benachbarte Roboter so angeordnet werden, dass ihre zweidimensionalen Arbeitsbereiche in der Aufsicht betrachtet in Querrichtung Y zumindest lückenlos aneinander grenzen, insbesondere überlappen,
insbesondere
- zwei in der gleichen Roboterlinie angeordnete, zueinander benachbarte Roboter so zueinander angeordnet werden, dass bei in die größte horizontale Auskragung bezüglich des kinematischen Zentrums hochgeschwenkten Oberarmen ihre in Richtung des jeweils anderen Roboters weisenden Oberarme in der Aufsicht betrachtet in Querrichtung Y überlappen.

## Claims

1. Industrial robot with parallel kinematics
a) with a robot base (4),
b) with a carrier element (5) which can accommodate an end effector (6),
c) with three movable robot arms (1, 2, 3),
d) wherein each robot arm (1, 2, 3) has a rotation drive (7, 8, 9) arranged on the robot base (4), an upper arm (11, 12, 13) driven for rotation around an upper arm axis (11', 12', 13') by the rotation drive (7, 8, 9) and a forearm (21, 22, 23) movably arranged on the upper arm (11, 12, 13),
e) wherein each forearm (21, 22, 23) has two parallel forearm rods (21a, b, 22a, b, 23a, b) and each forearm rod is movably connected to the upper arm (11, 12, 13) via a basis-side forearm joint and to the carrier element (4) via a carrier-side forearm joint (21a2, 21b2, 22a2, 22b2, 23a2, 23b2),
f) wherein the centres of the carrier-side forearm joints (21a2, 21b2, 22a2, 22b2, 23a2, 23b2) of all forearm rods (21a, b, 22a, b, 23a, b) lie in a common carrier element plane (5') which lies perpendicular to a z-axis of a robot coordinate system (x-y-z) and parallel to an x-y-plane spanned by an x-axis and a y-axis of the robot coordinate system,
g) wherein the upper arm axes (11', 12', 13') of the three robot arms (1, 2, 3) in a projection onto the x-y-plane form a triangle,
h) wherein one of the intermediate angles (α1) is smaller than the other two and thus forms the smallest intermediate angle (α1), which is smaller than 25°,
- wherein the two upper arm axes (12', 13'), which border the smallest intermediate angle (α1) extend in a common base plane (4'), which is the x-y-plane, and the intersection point of the z-axis with said x-y-axis corresponds to the zero value of said z-axis,
- wherein the centre point (19) of the projection of a three-dimensional admissible working region (17) of the industrial robot lies on the x-y-plane away from the kinematic centre (KZ) of the industrial robot (10),
- wherein the admissible working region (17) of the industrial robot (10) corresponds to the set of all possible positions of a carrier element centre (TZ) of the industrial robot during a movement of the robot arms (1, 2, 3),
- wherein the carrier element centre (TZ) is the intersection point of the perpendicular bisector (14', 15', 16') lying in the carrier element plane (5') onto the joint lines (24', 25', 26') of the centres of the two carrier-side forearm joints (21a2, 21b2, 22a2, 22b2, 23a2, 23b2) of the robot arms (1, 2, 3), and
- wherein the kinematic centre (KZ) is a straight line parallel to the z-axis, in which the three planes intersect, which run through the centres of the connecting lines (24, 25, 26) of the centres of the two basis-side forearm joints (21a1, 21b1, 22a1, 22b1, 23a1, 23b1) of a robot arm and perpendicular to said connecting line (24, 25, 26).

2. Industrial robot according to claim 1,
**characterized in that**
the smallest intermediate angle (α1) is smaller than 20°, preferably smaller than 18°, more preferably smaller than 16°.

3. Industrial robot according to claim 2,
**characterized in that**
the angle bisector (20) through the smallest (α1) of the three intermediate angles (α1, α2, α3) is the x-axis of the robot coordinate system.

4. Industrial robot according to any of the preceding claims,
**characterized in that**
- the intersection point of the kinematic centre (KZ) with the base plane (4') is the zero point of the z-axis and in particular the zero point of the x-y-z-robot coordinate system.

5. Industrial robot according to any of the preceding claims,
**characterized in that**
- the centre point (19) of the projection (18) is the geometric centre of gravity of the projection surface,
- in particular the projection (18) of the working region (17) is substantially a rectangle.

6. Industrial robot according to any of the preceding claims,
**characterized in that**
- the distance di,max is the largest possible distance between the connecting line (24, 25, 26) of the centres of the base-side forearm joints (21a1, 21a2, 22a1, 22a2, 23a1, 23a2) of the i-th robot arm on the one hand and the perpendicular bisector through the centre point (19) of the projection (18) of the working region (17) onto the x-y-plane on the other hand during a rotation of the upper arm (11, 12, 13) of the i-th robot arm (1, 2, 3) around its upper arm axis (11', 12', 13'), wherein i e {1, 2, 3}, and
- d1, max of the first robot arm (1) is smaller than d2,max of the second robot arm (2) and smaller than d3,max of the third robot arm (3), and
- in particular d2,max of the second robot arm (2) and d3,max of the third robot arm (3) are equal.

7. Industrial robot according to any of claims 1 to 5,
**characterized in that**
- the distance si,max is the largest possible distance between the connecting line (24, 25, 26) of the centres of the base-side forearm joints (21a1, 21b1, 22a1, 22b1, 23a1, 23b1) of the i-th robot arm on the one hand and the kinematic centre (KZ) on the other hand during a rotation of the upper arm (11, 12, 13) of the i-th robot arm around its upper arm axis (11', 12', 13'), wherein i e {1, 2, 3}, and
- that s1,max of the first robot arm (1) is smaller than s2,max of the second robot arm (2) and smaller than s3,max of the third robot arm (3), and
- in particular s2,max of the second robot arm (2) and s3,max of the third robot arm (3) are equal.

8. Industrial robot according to any of the preceding claims,
**characterized in that**
the mass inertia ratio between the mass inertia momentum of the rotation drive around its rotation axis and the mass inertia momentum of the robot arm (1, 2, 3) driven by the rotation drive (7, 8, 9) around its upper arm axis (11', 12', 13') at the first robot arm (1) is different from the mass inertia ratio of the second robot arm (2) and different from the mass inertia ratio of the third robot arm (3), in particular when the three robot arms have the same attitude between upper arm and forearm.

9. Industrial robot according to claim 8,
**characterized in that**
- the mass inertia ratio of the first robot arm (1) is larger than the mass inertia ratio of the second robot arm (2) as well as the third robot arm (3), and
- in particular the mass inertia ratio of the second robot arm (2) and the mass inertia ratio of the third robot arm (3) are equal.

10. Industrial robot according to any of the preceding claims,
**characterized in that**
- the mass inertia momentum of the rotation drive (7) at one robot arm, in particular the first robot arm (1), is larger than at the other two robot arms (2, 3),
- wherein the mass inertia momentum of the rotation drives (8, 9) preferably is equal at the other two robot arms.

11. Industrial robot according to any of the preceding claims,
**characterized in that**
- at one of the robot arms, the distance between the centres of the base-side forearm joints and/or the carrier-side forearm joints is larger than at the other two robot arms,
- in particular **in that** at the first robot arm, the distance is larger than at the second robot arm and at the third robot arm, and that the distance at the second and third robot arm is equal.

12. Industrial robot according to any of the preceding claims,
**characterized in that**
the carrier element has a larger extension along the y-axis than along the x-axis and/or
- the upper arm axes of all three robot arms lie in a common base plane.

13. Industrial robot according to any of the preceding claims,
**characterized in that**
- at at least one robot arm, the primary direction of extension of the upper arm extends at an angle which is different from the corresponding upper arm axis by 90°,
- in particular at all three robot arms, the primary direction of extension of the upper arm extends at an angle which is different from the corresponding upper arm axis by 90°.

14. Industrial robot according to any of the preceding claims,
**characterized in that**
- at the carrier element adjacent to a fastening device for fastening an end effector laterally offset at least one coupling is disposed, to which a transmission element, in particular a drive shaft, can be coupled,
and/or
- the robot base is formed as a plate.

15. Industrial robot according to any of the preceding claims,
**characterized in that**
- two of the rotation drives are disposed at the side of the robot base facing the carrier element, in particular at the plate, and that a rotation drive is disposed on the side of the robot base facing the carrier element, in particular at the plate, in particular
- the rotation drive, which is disposed on the side of the plate facing away from the carrier element is provided with an angular gear.

16. Industrial robot according to any of the preceding claims,
**characterized in that**
- the robot base, which is preferably formed as a plate, has a section for at least one of the forearms which is open at its edge,
- in particular has a section for the first robot arm which is open at its edge.

17. Industrial robot according to any of the preceding claims,
**characterized in that**
- at at least one robot arm, in particular the first robot arm, the upper arm axis viewed from above runs through the kinematic centre or on the side of the kinematic centre facing away from the basis-side forearm joints of the forearm of said robot arm,
- or the kinematic centre between the upper arm axis and the connecting line runs through the centres of the drive-side forearm joints.

18. Industrial robot according to any of the preceding claims,
**characterized in that**
the robot arms are dimensioned and positioned at the robot basis in such a manner that independently from the pivot position of the upper arms none of the base-side forearm joints extends beyond the projection of the working region onto the x-y-plane when viewed from above.

19. Robot track (100), comprising at least robot line (101a, b) extending along a main extension direction, the travelling direction X, of the robot track (100), along which multiple robots (10) according to any of the preceding claims are arranged one after the other,
wherein
when viewed from above, the robots (10) are arranged such that
- the direction, in which the projection (18) of the working region (17) onto the x-y-plane has the largest extension, in particular the y-direction of the robot coordinate system x-y-z runs transversely, in particular perpendicularly, to the travelling direction X of the track coordinate system X-Y-Z
and/or
- the direction, in which the projection (18) of the working region (17) onto the x-y-plane has the smallest extension, in particular the x-axis of the robot coordinate system x-y-z runs at an acute angle, in particular parallelly, to the travelling direction X of the track coordinate system X-Y-Z.

20. Robot track according to claim 19,
**characterized in that** the upper arms of the robot when viewed from above, with the upper arms being pivoted upwards into the largest horizontal cantilever with respect to the kinematic centre, extend from the kinematic centre by a different distance and the robots in the robot track are arranged such that the upper arm extending the least far from the kinematic centre is arranged in the robot line always pointing to the same direction, i.e. to the travelling direction X or opposite to it.

21. Robot track according to any of claims 19 to 20,
**characterized in that**
- the control unit (10*) of the robot or the control unit (100*) of the robot track (100) moves the robot (10) in such a manner that the carrier centre (TZ) approaches only within the admissible working region (17),
- in particular the projection (18) of the admissible working region (17) onto the x-y-plane has a substantially rectangular base shape, in particular is rectangular.

22. Robot track according to any of claims 19 to 21,
wherein the robot track comprises two parallel robot lines,
**characterized in that**
the robots are arranged in the robot track in such a manner that in the one robot line the upper arm extending the least far from the kinematic centre is always pointing into the same direction, i.e. the travelling direction X, and in the other robot line opposite to the travelling direction X.

23. Robot track according to claim 22,
**characterized in that**
- two robots arranged in the neighbouring robot lines which in the travelling direction X are on the same longitudinal position or neighbouring with respect to their longitudinal position are arranged such that their two-dimensional working regions when viewed from above are at least adjacent to one another without a gap, in particular overlap,
in particular
- two robots arranged in the same robot line neighbouring to one another are arranged with respect to one another in such a manner that with upper arms pivoted upwards to the largest horizontal cantilever with respect to the kinematic centre their upper arms pointing into the direction of the respective other robot when viewed from above overlap in the transverse direction Y

## Revendications

1. Robot industriel avec une cinématique parallèle
a) avec une base de robot (4),
b) avec un élément de support (5) qui peut loger un effecteur d'extrémité (6),
c) avec trois bras de robot mobiles (1, 2, 3),
d) dans lequel chaque bras de robot (1, 2, 3) comprend un entraînement en rotation (7, 8, 9) disposé sur la base de robot (4), un bras supérieur (11, 12, 13) entraîné par l'entraînement en rotation (7, 8, 9) pour la rotation autour d'un axe de bras supérieur (11', 12', 13') et un bras inférieur (21, 22, 23) disposé de manière mobile sur le bras supérieur (11, 12, 13),
e) dans lequel chaque bras inférieur (21, 22, 23) comprend deux tiges de bras inférieur parallèles (21a, b, 22a, b, 23a, b) et chaque tige de bras inférieur est relié par l'intermédiaire d'une articulation de bras inférieur côté base de manière mobile avec le bras supérieur (11, 12, 13) et par l'intermédiaire d'une articulation de bras inférieur côté support (21a2, 21b2, 22a2, 22b2, 23a2, 23b2) de manière mobile avec l'élément de support (4),
f) dans lequel les centres des articulations de bras inférieur côté support (21a2, 21b2, 22a2, 22b2, 23a2, 23b2) de toutes les tiges du bras inférieur (21a, b, 22a, b, 23a, b) se trouvent dans un plan d'élément de support commun (5') qui s'étend perpendiculairement à un axe z d'un système de coordonnées de robot (x-y-z) et parallèlement à un plan x-y défini par un axe x et un axe y du système de coordonnées de robot,
g) dans lequel les axes de bras supérieur (11', 12', 13') des trois bras du robot (1, 2, 3) définissent, dans une projection sur le plan x-y, un triangle,
h) dans lequel un des trois angles intermédiaires (α1) est inférieur aux deux autres et forme donc l'angle intermédiaire le plus petit (α1) qui est inférieur à 25°,
- et dans lequel les deux axes du bras supérieur (12', 13'), qui forment l'angle intermédiaire le plus petit (α1), s'étendent dans un plan de base commun (4') qui est le plan x-y et le point d'intersection de l'axe z avec ce plan x-y correspond au point zéro de l'axe z,
**caractérisé en ce que**
- le centre (19) de la projection d'une zone de travail tridimensionnelle admissible (17) du robot industriel se trouve sur le plan x-y à l'écart du centre cinématique (KZ) du robot industriel (10),
- dans lequel la zone de travail admissible (17) du robot industriel (10) correspond à la quantité de toutes les positions possibles d'un centre d'élément de support (TZ) du robot industriel lors d'un déplacement des bras du robot (1, 2, 3),
- dans lequel le centre d'élément de support (TZ) est le point d'intersection des perpendiculaires centrales (14', 15', 16') se trouvant dans le plan d'élément de support (5') avec les tronçons d'articulation (24', 25', 26') des centres des deux articulations de bras inférieur côté support (21a2, 21b2, 22a2, 22b2, 23a2, 23b2) des bras du robot (1, 2, 3) et
- dans lequel le centre cinématique (KZ) est une droite parallèle à l'axe z, dans laquelle se croisent les trois plans qui s'étendent chacun à travers les milieux des tronçons de liaison (24, 25, 26) des centres des deux articulations de bras inférieure côté base (21a1, 21b1, 22a1, 22b1, 23a1, 23b1) d'un bras de robot et perpendiculairement à ce tronçon de liaison (24, 25, 26).

2. Robot industriel selon la revendication 1,
**caractérisé en ce que**
l'angle intermédiaire le plus petit (α1) est inférieur à 20°, de préférence inférieur à 18°, plus particulièrement de préférence inférieur ou égal à 16°.

3. Robot industriel selon la revendication 2,
**caractérisé en ce que**
- la bissectrice (20) de l'angle le plus petit (α1) des trois angles intermédiaires (α1, α2, α3) est l'axe x du système de coordonnées du robot
et/ou
- l'axe y est perpendiculaire à l'axe x et est perpendiculaire à l'axe z.

4. Robot industriel selon l'une des revendications précédentes,
**caractérisé en ce que**
- le point d'intersection du centre cinématique (KZ) avec le plan de base (4') est le point zéro de l'axe z et plus particulièrement le point zéro du système de coordonnées du robot x-y-z.

5. Robot industriel selon l'une des revendications précédentes,
**caractérisé en ce que**
- le centre (19) de la projection (18) est le centre de gravité géométrique de la surface de projection,
- plus particulièrement la projection (18) de la zone de travail (17) est globalement un rectangle.

6. Robot industriel selon l'une des revendications précédentes,
**caractérisé en ce que**
- la distance di,max est la plus grande distance possible entre le tronçon de liaison (24, 25, 26) des centres des articulations de bras inférieur côté base (21a1, 21b1, 22a1, 22b1, 23a1, 23b1) du i-ième bras de robot d'une part et les perpendiculaires centrales à travers le centre (19) de la projection (18) de la zone de travail (17) sur le plan x-y d'autre part lors d'une rotation du bras supérieur (11, 12, 13) du i-ième bras de robot (1, 2, 3) autour de son axe de bras supérieur (11', 12', 13'), dans lequel i E {1, 2, 3} et
- d1,max du premier bras de robot (1) est inférieure à d2,max du deuxième bras de robot (2) et inférieur à d3,max du troisième bras de robot (3) et
- plus particulièrement d2,max du deuxième bras de robot (2) et d3,max du troisième bras de robot (3) sont égales.

7. Robot industriel selon l'une des revendications 1 à 5,
**caractérisé en ce que**
- la distance si,max est la grande distance possible entre le tronçon de liaison (24, 25, 26) des centres des articulations de bras inférieur côté base (21a1, 21b1, 22a1, 22b1, 23a1, 23b1) du i-ième bras de robot d'une part et le centre cinématique (KZ) d'autre part lors d'une rotation du bras supérieur (11, 12, 13) du i-ième bras de robot autour de son axe de bras supérieur (11', 12', 13'), dans lequel i E {1, 2, 3} et
- si,max du premier bras de robot (1) est inférieure à s2,max du deuxième bras de robot (2) et inférieur à s3,max du troisième bras de robot (3) et
- plus particulièrement s2,max du deuxième bras de robot (2) et s3,max du troisième bras de robot (3) sont égales.

8. Robot industriel selon l'une des revendications précédentes,
**caractérisé en ce que**
le rapport d'inertie de masse entre le moment d'inertie de masse de l'entraînement du robot autour de son axe de rotation et le moment d'inertie de masse du bras de robot (1, 2, 3) entraîné par l'entraînement en rotation (7, 8, 9) autour de son axe de bras supérieur (11', 12', 13') du premier bras de robot (1) est différent du rapport d'inertie de masse du deuxième bras de robot (2) et est différent du rapport d'inertie de masse du troisième bras de robot (3), plus particulièrement lorsque, pour les trois bras du robot, la même position existe entre le bras supérieur et le bras inférieur.

9. Robot industriel selon la revendication 8,
**caractérisé en ce que**
- le rapport d'inertie de masse du premier bras de robot (1) est supérieur au rapport d'inertie de masse du deuxième bras de robot (2) ainsi que du troisième bras de robot (3) et
- plus particulièrement le rapport d'inertie de masse du deuxième bras de robot (2) et le rapport d'inertie de masse du troisième bras de robot (3) sont égaux.

10. Robot industriel selon l'une des revendications précédentes,
**caractérisé en ce que**
- le moment d'inertie de masse de l'entraînement du robot (7) pour un bras de robot, plus particulièrement pour le premier bras de robot (1), est plus grand que pour les deux autres bras du robot (2, 3),
- dans lequel les moments d'inertie de masse des entraînements en rotation (8, 9), de préférence pour les deux autres bras de robot, sont égaux.

11. Robot industriel selon l'une des revendications précédentes,
**caractérisé en ce que**
- pour un des bras de robot, la distance entre les centres des articulations de bras inférieur côté base et/ou des articulations de bras inférieur côté support est plus grande que pour les deux autres bras du robot,
- plus particulièrement, pour le premier bras de robot, la distance est plus grande que pour le deuxième bras de robot et pour le troisième bras de robot et les distances pour les deuxième et troisième bras du robot sont égales.

12. Robot industriel selon l'une des revendications précédentes,
**caractérisé en ce que**
l'élément de support présente, le long de l'axe y, une extension plus grande que le long de l'axe x et/ou
- les axes du bras inférieur de trois bras du robot se trouvent dans plan de base commun.

13. Robot industriel selon l'une des revendications précédentes,
**caractérisé en ce que**
- pour au moins un bras de robot, la direction d'extension principale du bras supérieur s'étend avec un angle différent de 90° par rapport à l'axe de bras supérieur correspondant,
- plus particulièrement, pour les trois bras du robot, la direction d'extension principale du bras supérieur s'étend avec un angle différent de 90° par rapport à l'axe de bras supérieur de bras supérieur.

14. Robot industriel selon l'une des revendications précédentes,
**caractérisé en ce que**
- sur l'élément de support, en plus d'un dispositif de fixation pour la fixation d'un effecteur d'extrémité, est disposé, de manière décalée latéralement, au moins un couplage auquel un élément de transmission, plus particulièrement un arbre d'entraînement, peut être couplé et/ou
- la base du robot est conçue comme une plaque.

15. Robot industriel selon l'une des revendications précédentes,
**caractérisé en ce que**
- deux des entraînements en rotation sont disposés sur le côté de la base du robot, plus particulièrement de la plaque, orienté vers l'élément de support et un entraînement en rotation est disposé sur le côté de la base du robot, plus particulièrement de la plaque,
opposé à l'élément de support,
- l'entraînement en rotation qui est disposé sur le côté de la plaque opposé à l'élément de support est équipé d'un renvoi d'angle.

16. Robot industriel selon l'une des revendications précédentes,
**caractérisé en ce que**
- la base du robot, conçue plus particulièrement comme une plaque, présente une découpe ouverte sur le bord pour au moins un des bras supérieurs,
- plus particulièrement une découpe ouverte sur le bord pour le premier bras du robot.

17. Robot industriel selon l'une des revendications précédentes,
**caractérisé en ce que**
- pour au moins un bras de robot, plus particulièrement pour le premier bras du robot, l'axe du bras supérieur s'étend, en vue de dessus, à travers le centre cinématique ou sur le côté du centre cinématique opposée par rapport aux articulations du bras inférieur côté base du bras inférieur de ce bras de robot,
- ou le centre cinématique s'étend entre l'axe du bras supérieur et les droites de liaison à travers les centres des articulations du bras inférieur côté entraînement.

18. Robot industriel selon l'une des revendications précédentes,
**caractérisé en ce que**
les bras du robot sont dimensionnés et positionnés sur la base du robot de sorte que, indépendamment de la position de pivotement des bras supérieurs, aucune des articulations du bras inférieur côté base ne dépasse de la projection de la zone de travail sur le plan x-y en vue de dessus.

19. Chaîne robotique (100) comprenant au moins une ligne de robots (101a, b) s'étendant dans la direction d'extension principale, la direction de passage X, de la chaîne robotique (100), le long de laquelle sont disposés, les unes derrière les autres, plusieurs robots (10) selon l'une des revendications précédentes,
**caractérisé en ce que**
en vue de dessus, les robots (10) sont disposés de sorte que
- la direction dans laquelle la projection (18) de la zone de travail (17) sur le plan x-y présente l'extension la plus grande, plus particulièrement la direction y du système de coordonnées du robot x-y-z s'étend transversalement, plus particulièrement perpendiculairement, par rapport à la direction de passage X du système de coordonnées de la chaîne X-Y-Z et/ou
- la direction dans laquelle la projection (18) de la zone de travail (17) sur le plan x-y présente l'extension la plus petite, plus particulièrement la direction x du système de coordonnées du robot x-y-z s'étend avec un angle aigu, plus particulièrement parallèlement, par rapport à la direction de passage X du système de coordonnées de la chaîne X-Y-Z.

20. Chaîne robotique selon la revendication 19,
**caractérisé en ce que**
les bras supérieurs des robots, en vue de dessus, lorsque les bras supérieurs sont pivotés vers le haut vers le porte-à-faux horizontal le plus grand par rapport au centre cinématique, s'écartent d'une distance différente du centre cinématique et les robots dans la chaîne robotique sont disposés de sorte que le bras supérieur s'écartant le moins loin du centre cinématique est toujours disposé de manière orientée dans la même direction, donc dans ou à l'encontre de la direction de passage X, dans la ligne de robots.

21. Chaîne robotique selon l'une des revendications 19 à 20,
**caractérisé en ce que**
- la commande (10*) du robot ou la commande (100*) de la chaîne robotique (100) déplace le robot (10) de sorte que le centre du support (TZ) s'approche uniquement à l'intérieur de la zone de travail admissible (17),
- plus particulièrement la projection (18) de la zone de travail admissible (17) sur le plan x-y présente une forme de base approximativement rectangulaire, plus particulièrement est rectangulaire.

22. Chaîne robotique selon l'une des revendications 19 à 21,
dans laquelle la chaîne robotique comprend deux lignes de robots parallèles, **caractérisée en ce que**
les robots de la chaîne robotique sont disposés de sorte que, dans une ligne de robots, le bras supérieur s'écartant le moins loin du centre cinématique est orienté dans la même direction, donc dans la direction de passage X, et, dans l'autre ligne de robots, à l'encontre de la direction de passage X.

23. Chaîne robotique selon la revendication 22,
**caractérisée en ce que**
- deux robots disposés, dans les deux lignes de robots adjacentes, dans la direction de passage X, sur la même position longitudinale ou adjacents entre eux en ce qui concerne leur position longitudinale, de sorte que leurs zones de travail bidimensionnelles, en vue de dessus, sont au moins adjacentes entre elles sans lacune dans la direction transversale Y, plus particulièrement se superposent, plus particulièrement,
- deux robots disposés dans la même ligne de robots, adjacents entre eux, sont disposés l'un par rapport à l'autre de sorte que, lorsque les bras supérieurs sont pivotés vers le haut dans le porte-à-faux horizontal le plus grand par rapport au centre cinématique, leurs bras supérieurs orientés dans la direction de l'autre robot respectif se superposent en vue de dessus dans la direction transversale Y
